# EUROPÄISCHE PATENTANMELDUNG

(11) **EP 3 173 146 A1**
(43) Veröffentlichungstag der Anmeldung: **31.05.2017**
(21) Anmeldenummer: 16176161.4
(22) Anmeldetag: 24.06.2016
(51) Int. Cl.: B01J 20/26, B01J 20/285, B01J 20/288, B01J 20/30, B01J 20/32, B01J 20/28, B01J 13/00, B01J 13/06

(54) **PORÖSES POLYMERMATERIAL ZUR BINDUNG VON METALL-HALTIGEN IONEN ODER ZUR REINIGUNG VON ORGANISCHEN MOLEKÜLEN**

(30) Priorität: 27.11.2015 DE 102015015220
(71) Anmelder: InstrAction GmbH, 68199 Mannheim (DE)
(72) Erfinder: MEYER, Christian, 68723 Schwetzingen (DE); LUNGFIEL, Kristian, 64404 Bickenbach (DE); WELTER, Martin, 69118 Heidelberg (DE); SCHWARZ, Thomas, 50676 Köln (DE)
(74) Vertreter: RatnerPrestia

(57) **Zusammenfassung**

Die vorliegende Erfindung betrifft ein Verfahren zur Herstellung von porösen Partikeln aus einem vernetzten Polymer, und die porösen Partikel selbst, die nach dem erfindungsgemäßen Verfahren herstellbar sind. Weiterhin betrifft die vorliegende Erfindung auch poröse Partikel aus einem vernetzten Hydroxy- oder Amino-Gruppen enthaltenden Polymer mit einem relativ geringen Quellfaktor. Die vorliegende Erfindung betrifft auch ein Kompositmaterial, in dem die erfindungsgemäßen porösen Partikel in einer kontinuierlichen wässrigen Phase dispergiert vorliegen. Ein weiterer Gegenstand der Erfindung betrifft auch ein Verfahren zur Herstellung des erfindungsgemäßen Kompositmaterials. Die erfindungsgemäßen porösen Partikel bzw. das erfindungsgemäße Kompositmaterial wird zur Reinigung von organischen Molekülen sowie zur Bindung von Metallen aus Lösungen verwendet. Die vorliegende Erfindung betrifft auch eine Filterkartusche, die erfindungsgemäße poröse Partikeln aus einem vernetzten Polymer oder das erfindungsgemäße Kompositmaterial.

## Beschreibung

Die vorliegende Erfindung betrifft ein Verfahren zur Herstellung von porösen Partikeln aus einem vernetzten Polymer, und die porösen Partikel selbst, die nach dem erfindungsgemäßen Verfahren herstellbar sind. Weiterhin betrifft die vorliegende Erfindung auch poröse Partikel aus einem vernetzten Hydroxy- oder Amino-Gruppen enthaltenden Polymer mit einem relativ geringen Quellfaktor. Die vorliegende Erfindung betrifft auch ein Kompositmaterial, in dem die erfindungsgemäßen porösen Partikel in einer kontinuierlichen wässrigen Phase dispergiert vorliegen. Ein weiterer Gegenstand der Erfindung betrifft auch ein Verfahren zur Herstellung des erfindungsgemäßen Kompositmaterials. Die erfindungsgemäßen porösen Partikel bzw. das erfindungsgemäße Kompositmaterial wird zur Reinigung von organischen Molekülen sowie zur Bindung von Metall-haltigen Ionen aus Lösungen verwendet. Die vorliegende Erfindung betrifft auch eine Filterkartusche, die erfindungsgemäße poröse Partikeln aus einem vernetzten Polymer oder das erfindungsgemäße Kompositmaterial enthält.

Die Entfernung bzw. Gewinnung oder Rückgewinnung von Metall-haltigen Ionen, insbesondere Schwermetall-haltige Ionen, aus Industrieabwässern, zum Beispiel bei galvanischen Betrieben, aus Katalysatorrückständen aus der petro-chemischen oder pharmazeutischen Industrie, aus Grubenwasser und Sickerwasser beispielsweise aus Bergwerken, der Renaturierung von Schwermetall-verseuchten Böden etc. ist eine zunehmend wichtige Aufgabe, da insbesondere Schwermetall-haltige Ionen entweder eine auf die Umwelt schädigende Wirkung haben sowie auch deren Rückgewinnung bei seltenen oder wirtschaftsstrategischen Metallen ein wirtschaftliches Interesse darstellt. D.h. zum einen stehen Umwelt-Aspekte im Vordergrund, zum anderen ist auch die Bereitstellung von wertvollen Metallen, deren Verfügbarkeit zunehmend fraglich wird bzw. deren Preis steigt, von hohem Interesse. Ein weiteres wichtiges Anwendungsfeld von Sorbentien zur Entfernung bzw. Gewinnung oder Rückgewinnung von Metall-haltigen Ionen, bzw. Schwermetall-haltigen Ionen ist die Abtrennung derer in der Trinkwasseraufbereitung sowie in der Meerwasserentsalzung. Ebenso ist auch die Abtrennung von Schwermetall-haltigen Ionen aus konzentrierten SalzLösungen, wie sie in der Chlor-Alkali-Elektrolyse oder ähnlichen Verfahren eingesetzt werden, von hohem Interesse.

Bisher bekannte Phasen/Sorbentien haben für die genannten Anwendungsbereiche oft keine ausreichende Bindungskapazität, um die zu bindenden Metall-haltigen Ionen in ausreichendem Maße beispielsweise aus hochkonzentrierten bzw. niedrig-konzentrierten Lösungen oder stark sauren Lösungen zu binden, insbesondere auch in der Gegenwart von Alkali- oder Erdalkalimetallionen. Dies liegt oft daran, dass die Bindungsstellen für die Metall-haltigen Ionen nicht in ausreichendem Maße vorhanden sind, bzw. die Sorbentien nur von einer Seite für die Metalle zugänglich sind. Weiterhin weisen bisher bekannte Phasen oft keine Stabilität über den gesamten Bereich von pH 0 bis pH 14 auf. Dieses gilt vor allem für Sorbentien, die aus Kieselgel basieren. Ein weiterer Nachteil vieler bisher bekannter Phasen ist, dass das gewünschte Metall-haltige Ion zwar gebunden werden kann, aber nicht auf einfache Art und Weise oder gar nicht von dem eingesetzten Sorbens wiedergewonnen werden kann. Durch die meist nicht zufriedenstellende Bindungskapazität bekannter Sorbentien/Phasen wird oft ein hohes Sorbens-/Phasen-Volumen erfordert, wodurch die Bindungsverfahren für Metall-haltige Ionen sehr aufwändig und kostenineffizient sind. Zudem ist durch die meist geringe Bindungskapazität bekannter Bindungs-Sorbentien für Metall-haltige Ionen eine häufigere Regeneration der Sorbentien notwendig.

Ähnliches gilt auch für Sorbentien, die als chromatographisches Material für Trennungen verwendet werden. Hier werden oft Sorbentien verwendet, die aus einem porösen Trägermaterial und einer darauf abgeschiedenen Beschichtung eines bindungsselektiven Polymers zusammengesetzt sind. Die Bindungskapazität solcher Sorbentien ist meist limitiert, da nur ein gewisser Prozentsatz des Porenvolumens des Trägermaterials mit dem bindungsselektiven Polymer beschichtet werden kann, damit die Zugänglichkeit der stationären Phase noch erhalten bleibt. Zusätzlich gibt es noch Wechselwirkungen des Trägermaterials mit der Beschichtung und mit dem Zielmolekül. Diese Wechselwirkungen führen zu einer geringeren Bindungskapazität und können für bestimmte chromatographische (Filter-)Anwendungen sehr störend sein. Deshalb wäre es wünschenswert ein chromatographisches Sorbens bereitzustellen, das diese genannten Nachteile nicht mit sich bringt, bzw. dessen Bindungskapazität verbessert ist.

Es war deshalb die Aufgabe der vorliegenden Erfindung, ein neues Sorbens bereitzustellen, das die oben genannten Nachteile teilweise oder vollständig nicht aufweist. Insbesondere ist es eine Aufgabe der vorliegenden Erfindung, ein Sorbens mit einer hohen Bindungskapazität gegenüber Metall-haltigen Ionen bzw. organischen Molekülen bereitzustellen. Vorzugsweise soll das Sorbens insbesondere mit Natriumhydroxid sanitisierbar sein, bzw. die Wiedergewinnung der Metall-haltigen Ionen bzw. organischen Moleküle auf einfache Art und Weise erlauben. Eine weitere Aufgabe der vorliegenden Erfindung ist es, ein Sorbens bereitzustellen, das auch unter sauren Bedingungen noch eine relativ hohe Bindungskapazität gegenüber Metallen aufweist.

Weiterhin soll gegenüber aus dem Stand der Technik bekannten Metall-Bindungs-Sorbentien bzw. chromatographischen Sorbentien das Volumen des für die Bindung der Zielmoleküle verwendeten Sorbens reduziert werden.

Die Aufgabe der vorliegenden Erfindung wird durch ein Verfahren zur Herstellung von porösen Partikeln aus einem vernetzten Polymer gelöst, wobei das Verfahren die folgenden Schritte umfasst:
(a) Aufbringen eines organischen Polymers auf ein poröses anorganisches Trägermaterial in Partikelform;
(b) Vernetzen des organischen Polymers in den Poren des anorganischen Trägermaterials; und
(c) Herauslösen des anorganischen Trägermaterials unter Erhalt der porösen Partikel aus einem vernetzten organischen Polymer.

Im Folgenden wird das unter Schritt (a) verwendete organische Polymer schlichtweg als "Polymer" bezeichnet.

Die porösen Partikel aus einem vernetzten Polymer können erfindungsgemäß auch als Sorbens im zuvor genannten Sinn bezeichnet werden.

Das poröse anorganische Trägermaterial in Partikelform ist vorzugsweise ein mesoporöses oder makroporöses Trägermaterial. Die mittlere Porengröße des porösen Trägermaterials liegt vorzugsweise im Bereich von 6 nm bis 400 nm, stärker bevorzugt im Bereich von 8 bis 300 nm und am stärksten bevorzugt im Bereich von10 bis 150 nm vor. Weiterhin ist es bevorzugt, dass das poröse Trägermaterial ein Porenvolumen im Bereich von 30 Vol.-% bis 90 Vol.-%, stärker bevorzugt von 40 bis 80 Vol.-% und am stärksten bevorzugt von 60 bis 70 Vol.-% aufweist, jeweils bezogen auf das Gesamtvolumen des porösen Trägermaterials. Die mittlere Porengröße und das Porenvolumen des porösen Trägermaterials können durch das Porenfüllverfahren mit Quecksilber gemäß DIN 66133 bestimmt werden.

Das poröse anorganische Material ist vorzugsweise eines, das sich in wässrig-alkalischen Bedingungen bei pH größer 10, stärker bevorzugt pH größer 11 und am stärksten bevorzugt pH größer 12 auflösen lässt. In anderen Worten findet der Schritt (c) des Herauslösens des anorganischen Trägermaterials unter Erhalt der porösen Partikel aus einem vernetzen Polymer in den genannten wässrig-alkalischen Bedingungen statt. Das poröse anorganische Material ist vorzugsweise eines auf Basis von Siliziumdioxid bzw. Kieselgel, bzw. besteht daraus.

Das poröse anorganische Trägermaterial ist vorzugsweise ein partikuläres Material mit einer durchschnittlichen Partikelgröße im Bereich von 5 µm bis 2000 µm, stärker bevorzugt im Bereich von 10 µm bis 1000 µm. Die Form der Partikel kann hierbei kugelförmig (sphärisch), stäbchenförmig, linsenförmig, Donut-förmig, elliptisch oder auch irregulär sein, wobei kugelförmige Partikel bevorzugt sind.

Der in Schritt (a) eingesetzte Anteil an Polymer liegt in einem Bereich von 5 Gel.-% bis 50 Gel.-%, stärker bevorzugt 10 bis 45 Gel.-% und noch stärker bevorzugt 20 bis 40 Gel.-%, jeweils bezogen auf das Gewicht des porösen anorganischen Trägermaterials ohne Polymer.

Das Aufbringen des Polymers auf das poröse anorganische Trägermaterial in Partikelform in Schritt (a) des erfindungsgemäßen Verfahrens kann durch verschiedene Verfahren, wie beispielsweise Tränkungsverfahren oder durch die Porenfüllmethode erfolgen, wobei die Porenfüllmethode bevorzugt ist. Die Porenfüllmethode bringt gegenüber herkömmlichen Tränkungsverfahren den Vorteil mit sich, dass insgesamt eine größere Menge an gelöstem Polymer in einem Schritt auf das poröse anorganische Trägermaterial aufgebracht werden kann, wodurch die Bindungskapazität erhöht wird.

Bei allen denkbaren Verfahren in Schritt (a) muss das Polymer in einem Lösungsmittel gelöst vorliegen. Als Lösungsmittel für das in Schritt (a) aufgebrachte Polymer wird vorzugsweise eines eingesetzt, in dem das Polymer löslich ist. Die Konzentration des Polymers für das Aufbringen auf das poröse anorganische Trägermaterial liegt vorzugsweise im Bereich von 5 g/L bis 200 g/L, stärker bevorzugt im Bereich von 10 g/L bis 180 g/L, am stärksten bevorzugt im Bereich von 30 bis 160 g/L.

Unter der Porenfüllmethode wird allgemein ein spezielles Beschichtungsverfahren verstanden, bei dem eine Lösung, die das aufzubringende Polymer enthält, in der Menge auf das poröse anorganische Trägermaterial aufgebracht wird, die dem Gesamtvolumen der Poren des porösen Trägermaterials entspricht. Das Gesamtvolumen der Poren [V] des porösen anorganischen Trägermaterials kann durch die Lösungsmittelaufnahmekapazität (WAK) des porösen anorganischen Trägermaterials bestimmt werden. Ebenso kann auch das relative Porenvolumen [Vol.-%] bestimmt werden. Hierbei handelt es sich jeweils um das Volumen der frei zugänglichen Poren des Trägermaterials, da nur dieses durch die Lösungsmittelaufnahmekapazität bestimmt werden kann. Die Lösungsmittelaufnahmekapazität gibt an, welches Volumen eines Lösungsmittels erforderlich ist, um den Porenraum eines Gramms trockenes Sorbens (vorzugsweise stationäre Phase) vollständig zu füllen. Als Lösungsmittel können hier sowohl reines Wasser oder wässrige Medien als auch organische Lösungsmittel wie Dimethylformamid dienen. Falls das Sorbens beim Befeuchten sein Volumen vergrößert (Quellung), wird die dafür aufgewendete Lösungsmittelmenge automatisch erfasst. Zur Messung der WAK wird eine genau gewogene Menge des porösen anorganischen Trägermaterials mit einem Überschuss gut benetzenden Lösungsmittels durchfeuchtet und überschüssiges Lösungsmittel aus dem Zwischenkornvolumen in einer Zentrifuge durch Rotation entfernt. Das Lösungsmittel innerhalb der Poren des Sorbens bleibt auf Grund der Kapillarkräfte in den Poren zurück. Die Masse des zurückgehaltenen Lösungsmittels wird durch Wägung ermittelt und über die Dichte des Lösungsmittels ins Volumen umgerechnet. Die WAK eines Sorbens wird als Volumen pro Gramm trockenes Sorbens (mL/g) berichtet.

Nach dem Schritt (a) aber vorzugsweise vor dem Schritt (b) wird das Lösungsmittel, in dem das Polymer auf das poröse anorganische Trägermaterial aufgebracht wird vorzugsweise durch Trocknung des Materials bei Temperaturen im Bereich von 40°C bis 100°C, stärker bevorzugt im Bereich von 50°C bis 90°C und am stärksten bevorzugt im Bereich von 50°C bis 75°C entfernt. Hierbei wird insbesondere bei einem Druck im Bereich von 0,01 bis 1 bar getrocknet, stärker bevorzugt bei einem Druck im Bereich von 0,01 bis 0,5 bar.

Der genannte Schritt (a) des Aufbringens eines Polymers auf ein poröses anorganisches Trägermaterial in Partikelform gemäß der Porenfüllmethode und der anschließende Trocknungsschritt kann vor dem Schritt (b) des Vernetzens des Polymers ein- oder mehrmals wiederholt werden. Wird bei den Wiederholungsschritten wieder die Porenfüllmethode verwendet, wird das Gesamtvolumen der Poren durch Differenzwägung des feuchten und des trockenen Materials nach Schritt (a) ermittelt, das für das wiederholte Aufbringen des Polymers auf das poröse anorganische Trägermaterial zur Verfügung steht.

Vorzugsweise erfolgt das jeweilige Entfernen des bei der Porenfüllmethode verwendeten Lösungsmittels durch Trocknen in einem Pflugschartrockner, da durch dieser Schritt deutlich beschleunigt werden kann.

Alternativ zu dem wiederholten Aufbringen eines Polymers kann auch nach Schritt (a) oder nach Schritt (b) ein Schritt stattfinden, bei dem eine weitere Schicht eines Polymers durch Kondensationsreaktion von einer organischen Verbindung mit mindestens 2 Amino-gruppen und einer organischen Verbindung, die in der Lage ist, mit mindestens 2 Stickstoffatomen der Aminogruppen eine kovalente Bindung einzugehen. Die organische Verbindung mit mindestens 2 Amino-gruppen ist vorzugsweise eine, die Aminogruppen in dem Maße enthält, dass das Verhältnis von Stickstoff zu Kohlenstoff (N/C) im Bereich von 0,1 bis 1,1, stärker bevorzugt im Bereich von 0,4 bis 1 liegt. Die organische Verbindung mit mindestens 2 Aminogruppen kann ein Diamin, Triamin, Tetraamin oder jegliches Polyamin sein. Ein Beispiel hierfür ist Ethylendiamin. Die organische Verbindung, die in der Lage ist, mit mindestens 2 Stickstoffatomen von Amino-gruppen eine kovalente Bindung einzugehen, kann ein Vernetzungsmittel sein, wie sie weiter unten in Verbindung mit der Vernetzung des organischen Polymers genannt sind. Besonders bevorzugt wird hier Epichlorhydrin eingesetzt.

Nach dem Schritt des Aufbringens des Polymers bzw. nach dem Trocknen des aufgebrachten Polymers auf dem porösen anorganischen Trägermaterial erfolgt in einem Schritt (b) das Vernetzen des Polymers in den Poren des anorganischen Trägermaterials.

Das Vernetzen des Polymers in den Poren des anorganischen Trägermaterials in Schritt (b) des erfindungsgemäßen Verfahrens erfolgt vorzugsweise so, dass der Vernetzungsgrad des Polymers mindestens 10 % beträgt, bezogen auf die Gesamtzahl der vernetzbaren Gruppen des Polymers. Der Vernetzungsgrad kann durch die entsprechend gewünschte Menge an Vernetzungsmittel eingestellt werden. Dabei wird angenommen, dass 100 Mol-'= des Vernetzungsmittels reagiert und Vernetzungen bildet. Dies kann durch analytische Verfahren wie durch MAS-NMR Spektroskopie und quantitative Bestimmung der Menge des Vernetzungsmittels in Bezug auf die Menge des eingesetzten Polymers verifiziert werden. Dieses Verfahren ist erfindungsgemäß zu bevorzugen. Der Vernetzungsgrad kann jedoch auch durch IR-Spektroskopie bezogen auf beispielsweise C-O-C oder OH-Schwingungen unter Verwendung einer Kalibrierungskurve bestimmt werden. Beide Verfahren sind analytische Standardverfahren für einen Fachmann in diesem Gebiet. Der maximale Vernetzungsgrad liegt vorzugsweise bei 60 %, stärker bevorzugt bei 50 % und am stärksten bevorzugt bei 40 %. Wenn der Vernetzungsgrad oberhalb der angegebenen Obergrenze liegt, ist die Polymerbeschichtung des Amino-Gruppen enthaltenden Polymers nicht flexibel genug und resultiert in einer geringeren Bindungs-Kapazität für Metall-haltige Ionen. Ist der Vernetzungsgrad unterhalb der angegebenen Untergrenze sind die daraus resultierenden porösen Partikel aus dem vernetzten Polymer nicht rigide genug, um beispielsweise als Partikel einer chromatographischen Phase verwendet zu werden, bei der zum Teil auch höhere Drücke angelegt werden. Werden die resultierenden porösen Partikel aus dem vernetzten Polymer direkt als Material für eine chromatographische Phase verwendet, so liegt der Vernetzungsgrad des Polymers vorzugsweise bei mindestens 20 %.

Das für die Vernetzung verwendete Vernetzungsmittel weist vorzugsweise zwei, drei oder mehr funktionelle Gruppen auf, durch deren Bindung an das Polymer die Vernetzung erfolgt. Das Vernetzungsmittel, das zur Vernetzung des in Schritt (a) aufgebrachten Polymers verwendet wird, wird vorzugsweise aus der Gruppe ausgewählt, die aus Dicarbonsäuren, Tricarbonsäuren, Harnstoff, Bis-Epoxiden oder Tris-Epoxiden, Diisocyanaten oder Triisocyanaten, Dihalogenalkylen oder Trihalogenalkylen und Halogenepoxiden besteht, wobei Dicarbonsäuren, Bis-Epoxide und Halogenepoxide bevorzugt sind, wie beispielsweise Terephthalsäure, Biphenyldicarbonsäure, Ethylenglykoldiglycidylether, 1,12-bis-(5-Norbornen-2,3-dicarboximido)-decandicarbonsäure und Epichlorhydrin, wobei Ethylenglykoldiglycidylether, 1,12-bis-(5-Norbornen-2,3-dicarboximido)-decandicarbonsäure und Epichlorhydrin stärker bevorzugt sind. Das Vernetzungsmittel ist in einer Ausführungsform der vorliegenden Erfindung vorzugsweise ein lineares, Molekül mit einer Länge zwischen 3und 20 Atomen.

Das in Schritt (a) eingesetzte Polymer ist vorzugsweise ein Polymer, das Hydroxy- oder Amino-Gruppen enthält, und zwar vorzugsweise eine Hydroxy-Gruppe oder Amino-Gruppe pro Wiederholungseinheit. Unter einer Wiederholungseinheit versteht man die kleinste Einheit eines Polymers, die sich in periodischen Abständen entlang der Polymerkette wiederholt. Ein Beispiel für ein solches Hydroxy-Gruppen enthaltendes Polymer ist Polyvinylalkohol. Amino-Gruppen enthaltende Polymere sind vorzugsweise Polymere, die primäre und/oder sekundäre Amino-Gruppen aufweisen. Es kann ein Polymer aus den gleichen Wiederholungseinheiten sein, es kann aber auch ein Co-Polymer sein, das vorzugsweise als Co-Monomere einfache Alkenmonomere oder polare, inerte Monomere wie Vinylpyrrolidon aufweist.

Beispiele für Amino-Gruppen enthaltende Polymere sind die folgenden: Polyamine, wie jegliche Polyalkylamine, z.B. Polyvinylamin, Polyalkylamin, Polyethylenimin und Polylysin etc. Unter diesen sind Polyalkylamine bevorzugt, noch stärker bevorzugt Polyvinylamin und Polyallylamin, wobei Polyvinylamin insbesondere bevorzugt ist.

Das bevorzugte Molekulargewicht des in Schritt (a) des erfindungsgemäßen Verfahrens eingesetzten Polymers liegt vorzugsweise im Bereich von 5.000 bis 50.000 g/mol, was insbesondere für das angegebene Polyvinylamin gilt.

Unter dem Herauslösen des anorganischen Trägermaterials in Schritt (c) versteht man, dass aus dem nach Schritt (b) erhaltenen Kompositpartikeln aus porösen anorganischen Trägermaterial und dem aufgebrachten Polymer das anorganische Trägermaterial entfernt wird. Der Schritt (c) des Herauslösens des anorganischen Trägermaterials unter Erhalt der porösen Partikel aus einem vernetzten Polymer erfolgt vorzugsweise in einer wässrig alkalischen Lösung mit einem pH größer 10, stärker bevorzugt pH größer 11, noch stärker bevorzugt pH größer 12. Hierbei wird als Base vorzugsweise ein Alkalihydroxid, stärker bevorzugt Kaliumhydroxid oder Natriumhydroxid, noch stärker bevorzugt Natriumhydroxid verwendet. Dabei ist es bevorzugt, dass die Konzentration des Alkalihydroxids in der wässrigen Lösung mindestens 10 Gel.-%, noch stärker bevorzugt 25 Gew.-%, bezogen auf das Gesamtgewicht der Lösung ist. Dabei werden im Schritt (c) des erfindungsgemäßen Verfahrens die aus Schritt (b) erhaltenen Partikel mit der entsprechenden wässrig alkalischen Lösung für mehrere Stunden in Kontakt gebracht. Anschließend wird das aufgelöste anorganische Trägermaterial so lange mit Wasser aus den porösen Partikeln aus dem vernetzten Polymer gewaschen, dass das anorganische Trägermaterial im Wesentlichen nicht mehr im Produkt enthalten ist. Dies hat den Vorteil, dass bei der Verwendung der erfindungsgemäß hergestellten porösen Partikel aus einem vernetzten Polymer beispielsweise als Bindungsmaterial von Metallen, dieses nur noch aus organischem Material besteht und somit unter Verbleib bzw. Rückgewinnung der Metalle vollständig bzw. rückstandsfrei verbrannt werden kann.

Weiterhin kann das vernetzte Polymer nach Schritt (c) in seinen Seitengruppen derivatisiert werden. Dabei wird vorzugsweise ein organischer Rest an das Polymer gebunden. Dieser Rest kann jeder denkbare Rest sein, wie eine aliphatische und aromatische Gruppe, die auch Heteroatome aufweisen können. Diese Gruppen können auch mit anionischen oder kationischen Resten bzw. protonierbaren oder deprotonierbaren Resten substituiert sein. Wird das nach dem erfindungsgemäßen Verfahren erhaltene vernetzte poröse Polymer zur Bindung von Metallen aus Lösungen verwendet, so ist die Gruppe, mit der die Seitengruppen des Polymers derivatisiert werden, eine Gruppe, die die Eigenschaft einer Lewis-Base aufweist. Unter einem organischen Rest, der die Eigenschaft einer Lewis-Base aufweist, versteht man insbesondere Reste, die eine Komplexbindung mit dem zu bindenden Metall eingehen. Organische Reste, die eine Lewis-Base aufweisen, sind beispielsweise solche, die Heteroatome mit freien Elektronenpaaren, wie N, 0, P, As oder S aufweisen.

Bevorzugte organische Reste für die Derivatisierung des Polymers sind die nachfolgend dargestellten Liganden:

| **Name** | **Struktur des Liganden auf dem Polymer** |
|---|---|
| **6-Aminonicotinsäuregruppen** | 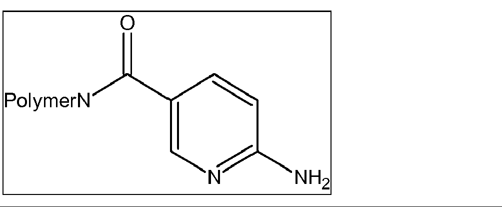 |
| **Arginin gruppen** | 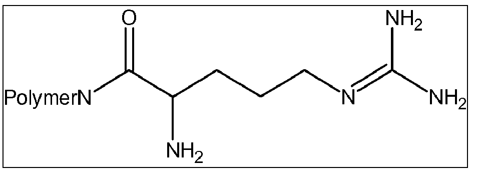 |
| **Bernsteinsäure-N-MethylPiperazin** | 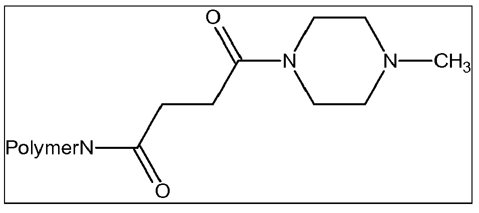 |
| **4-[(4-aminopiperazin-1-yl**)**amino**]-**4**-**oxobutansäuregruppen** | 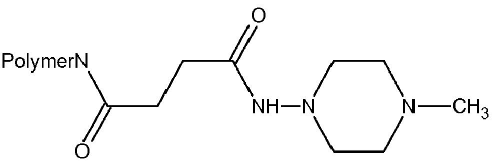 |
| **Bernsteinsäuregruppen** | 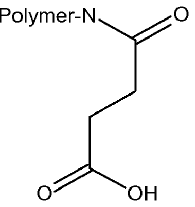 |
| **Creatingruppen** | 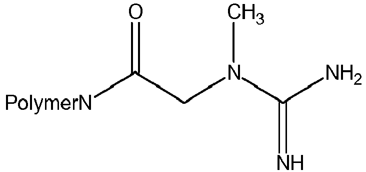 |
| **Diaminobicyclooctancarbonsäure** | 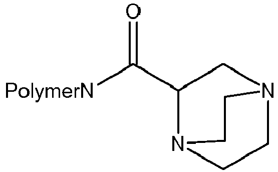 |
| **Diethylentriamin** | 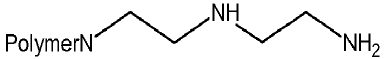 |
| **Diglykolsäuregruppen** | 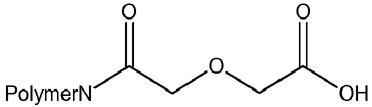 |
| **Ethylendiamintetraessigsäuregruppen Anbindung kann an 1-4 Säuregruppen erfolgen** | 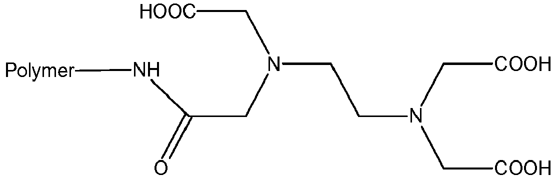 |
| **Ethylphosphonylcarbonylgruppe** | 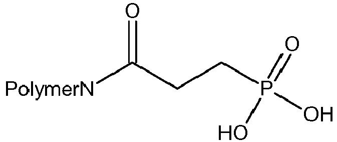 |
| N-Ethanthiol-Gruppen | 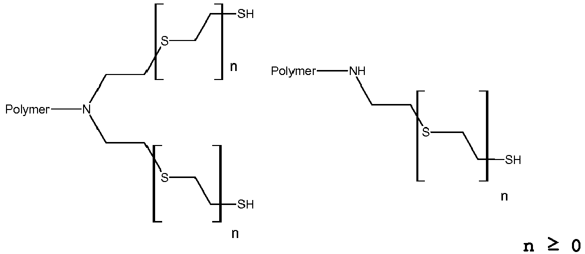 |
| **N,N-Diethansäure-Gruppen Die Chloressigsäure kann die Amino-Gruppe mono oder Disubstituieren** | 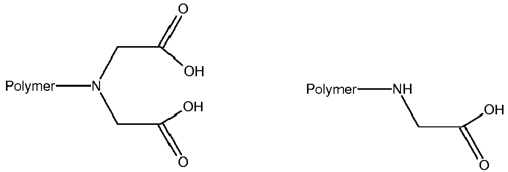 |
| **4-Aminobuttersäuregruppen** | 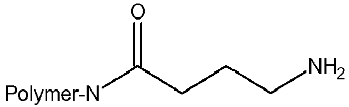 |
| **Glutarsäuregruppen** | 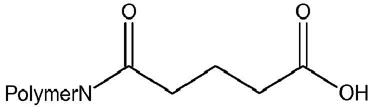 |
| **4-Piperidincarbonsäuregruppen** | 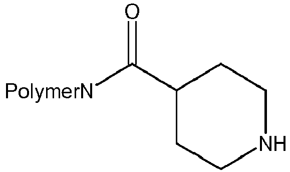 |
| **4-Imidazolylacetylgrup pen** | 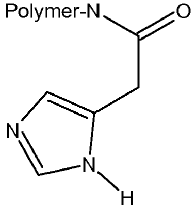 |
| **4-Imidazolylacrylsäuregruppen** | 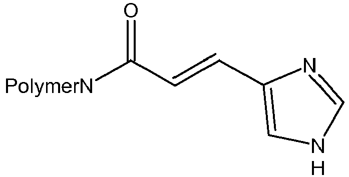 |
| **Isonicotinsäuregruppen** | 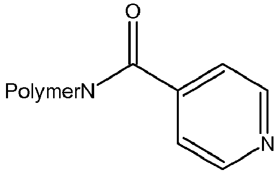 |
| **Lysinsäuregruppen** | 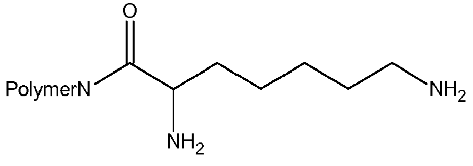 |
| **Methylthioharnstoffgruppen** | 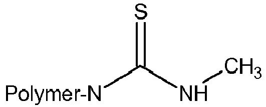 |
| **Nitrilotriessigsäure Anbindung erfolgt über 1-3 Carbonsäuregruppen** | 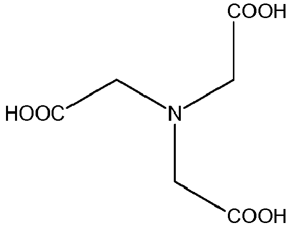 |
| **Phosphorsäuregruppe Kann vernetzten wirken.** | 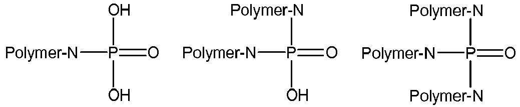 |
| **Prolin** | 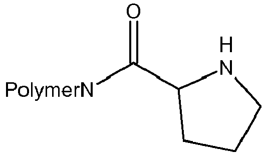 |
| **Purin-6-carbonsäuregruppen** | 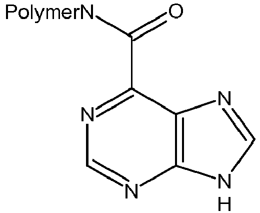 |
| **Pyrazin-2-carbonsäuregruppen** | 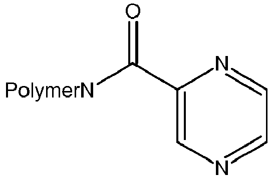 |
| **Thymin-N-essigsäuregruppen** | 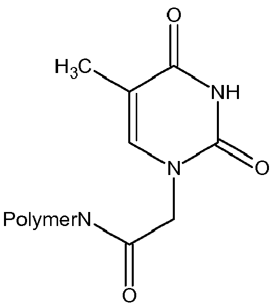 |
| **Theophyllin-7-essigsäuregruppen** | 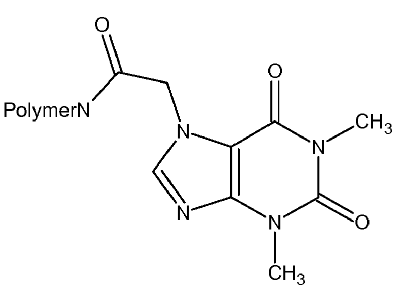 |
| **Zitronensäuregruppen** | 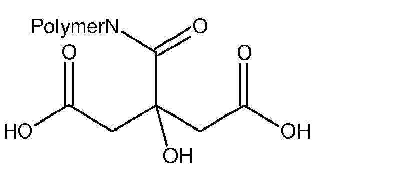 |

Insbesondere bevorzugt sind die Liganden PVA, d.h. die Aminogruppe des PVA, NTA, EtSH, MeSH, EDTA und iNic oder Kombinationen der genannten. Beispielsweise ist eine Kombination von PVA mit NTA oder EtSH besonders bevorzugt.

Besonders bevorzugt wird als Polymer in dem erfindungsgemäßen Verfahren Polyvinylamin eingesetzt, da die Aminogruppen des Polyvinylamins selbst Lewis-Basen darstellen und zudem durch ihre Eigenschaft als nukleophile Gruppen leicht an ein Molekül mit einem elektrophilen Zentrum ankoppelbar sind. Dabei werden vorzugsweise Kopplungsreaktionen verwendet, bei denen ein sekundäres Amin und nicht ein Amid entsteht, da dabei die Lewis-Basizität durch Bildung eines sekundären Amins nicht gänzlich verloren geht.

Die vorliegende Erfindung betrifft auch poröse Partikel aus einem vernetzten Polymer, die nach dem vorstehenden erfindungsgemäßen Verfahren erhältlich sind. Dabei ist es bevorzugt, dass die nach dem erfindungsgemäßen Verfahren hergestellten Partikel einen maximalen Quellfaktor in Wasser von 300 % aufweisen, wenn man davon ausgeht, dass ein Wert von 100 % für die trockenen Partikel gilt. In anderen Worten können die erfindungsgemäßen Partikel maximal in Wasser um das Dreifache an Gewicht zunehmen.

Ein weiterer Gegenstand der vorliegenden Anmeldung sind auch poröse Partikel aus einem vernetzten Hydroxy- oder Amino-Gruppen enthaltenden Polymer, wobei auch diese Partikel einen maximalen Quellfaktor von 300 % aufweisen, wenn man davon ausgeht, dass der Prozentsatz der trockenen Partikel bei 100 % liegt. In anderen Worten können auch diese erfindungsgemäßen porösen Partikel bei Quellung in Wasser eine maximale Volumenzunahme um das Dreifache haben.

Noch bevorzugter ist es jedoch, dass die nach dem erfindungsgemäßen Verfahren hergestellten Partikel bzw. die erfindungsgemäßen Partikel einen maximalen Quellfaktor in Wasser von 250 %, noch stärker bevorzugt 200 % und am stärksten bevorzugt von 150 % aufweisen, da ansonsten die Rigidität der erhaltenen Teilchen zumindest für chromatographische Anwendungen unter Druck nicht ausreichend hoch ist.

Die nach dem erfindungsgemäßen Verfahren hergestellten porösen Partikel sowie die erfindungsgemäßen porösen Partikel sind vorzugsweise aus einem vernetzten Amino-Gruppen enthaltenden Polymer. Das Amino-Gruppen enthaltende Polymer bzw. die daraus bestehenden porösen Partikel weisen vorzugsweise eine durch Titration bestimmte Konzentration der Amino-Gruppen von mindestens 800µmol/mL, stärker bevorzugt mindestens 1000 µmol/mL, und noch stärker bevorzugt von mindestens 1200 µmol/mL auf. Unter der durch Titration bestimmten Konzentration der Amino-Gruppen wird die Konzentration verstanden, die gemäß dem im Beispiels-Teil dieser Anmeldung angegebenen analytischen Methoden durch Durchbruchsmessung mit 4-Toluolsulphonsäure erhalten wird.

Die erfindungsgemäß hergestellten Partikel bzw. die erfindungsgemäßen Partikel weisen vorzugsweise eine Trockenschüttdichte im Bereich von 0,25 g/mL bis 0,8 g/mL, noch stärker bevorzugt 0,3 g/mL bis 0,7 g/mL auf. In anderen Worten sind die porösen Partikel insgesamt äußerst leichte Partikel, was durch die erhaltene hohe Porosität gewährleistet ist. Trotz der hohen Porosität und dem geringen Gewicht der Partikel weisen diese eine relativ hohe mechanische Festigkeit bzw. Rigidität auf und können auch in chromatographischen Anwendungen als Phasen unter Druck verwendet werden.

Die durch inverse Größenausschlusschromatographie ermittelte mittlere Porengröße der erfindungsgemäß hergestellten oder erfindungsgemäßen porösen Partikel liegt vorzugsweise im Bereich von 1 nm bis 100 nm, stärker bevorzugt 2 nm bis 80 nm.

Die erfindungsgemäß hergestellten porösen Partikel bzw. erfindungsgemäßen porösen Partikel sind vorzugsweise Partikel, die eine ähnliche Form aufweisen, wie sie das herausgelöste poröse anorganische Trägermaterial hatte, jedoch mit der Maßgabe, dass die erfindungsgemäßen bzw. erfindungsgemäß hergestellten porösen Partikel im Wesentlichen mit ihrem Material das Porensystem des herausgelösten porösen anorganischen Trägermaterials widerspiegeln, d.h. sie sind im Falle der idealen Porenfüllung in Schritt (b) des erfindungsgemäßen Verfahrens das inverse Porenabbild des verwendeten porösen anorganischen Trägermaterials. Die erfindungsgemäßen bzw. erfindungsgemäß hergestellten porösen Partikel liegen vorzugsweise in einer im Wesentlichen sphärischen Form vor. Deren mittlere Partikelgröße liegt vorzugsweise im Bereich von 5 µm bis 1000 µm, stärker bevorzugt im Bereich von 20 bis 300 µm.

Weiterhin sind die erfindungsgemäß hergestellten bzw. erfindungsgemäßen porösen Partikel aus dem vernetzten Polymer dadurch gekennzeichnet, dass sie im Wesentlichen aus dem vernetzten Polymer bestehen. "Im Wesentlichen" heißt in diesem Fall, dass nur unvermeidliche Rückstände von beispielsweise anorganischem Trägermaterial, in den porösen Partikeln noch enthalten sein können, deren Anteil jedoch vorzugsweise unter 2000 ppm, noch stärker bevorzugt 1000 ppm und am stärksten bevorzugt 500 ppm liegt. In anderen Worten ist es bevorzugt, dass die erfindungsgemäßen bzw. erfindungsgemäß herstellbaren porösen Partikel aus dem vernetzten Polymer im Wesentlichen frei von einem anorganischen Material, wie beispielsweise dem Material des anorganischen Trägermaterials sind. Dies ist auch weiter oben in Verbindung mit dem Schritt (c) des erfindungsgemäßen Verfahrens gemeint, wenn davon gesprochen wird, dass das anorganische Trägermaterial im Wesentlichen nicht mehr im Produkt enthalten ist.

Die vorliegende Erfindung betrifft auch ein Kompositmaterial, in dem die erfindungsgemäßen bzw. erfindungsgemäß hergestellten porösen Partikel in einer kontinuierlichen wässrigen Phase dispergiert vorliegen, wobei die kontinuierliche wässrige Phase in ein Hydrogel eingebettet und/oder Bestandteil eines Hydrogels ist und/oder von einer wasserunlöslichen, ionenpermeablen Hülle umgeben ist.

Das erfindungsgemäße Kompositmaterial liegt vorzugsweise so vor, dass die erfindungsgemäßen porösen Partikel bzw. erfindungsgemäß hergestellten porösen Partikel in einer kontinuierlichen wässrigen Phase in einem Hydrogel eingebettet vorliegen.

Unter einem Hydrogel wird vorliegend ein ein Lösungsmittel (vorzugsweise Wasser) enthaltendes, aber Lösungsmittel-lösliches Polymer verstanden, dessen Moleküle chemisch, z. B. durch kovalente oder ionische Bindungen, oder physikalisch, z. B. durch Verschlaufen der Polymerketten, zu einem dreidimensionalen Netzwerk verknüpft sind. Durch eingebaute polare (vorzugsweise hydrophile) Polymerkomponenten quellen sie im Lösungsmittel (vorzugsweise Wasser) unter beträchtlicher Volumenzunahme, ohne aber ihren stofflichen Zusammenhalt zu verlieren.

Das erfindungsgemäße Kompositmaterial liegt vorzugsweise in der Form von Partikeln vor, die sphärisch, linsenförmig oder stäbchenförmig sein können, wobei linsenförmige Partikel bevorzugt sind. Die linsenförmigen Partikel weisen vorzugsweise in der Breite einen mittleren Durchmesser im Bereich von 1 mm bis 10 mm und eine mittlere Höhe im Bereich von 100 µm bis 1000 µm auf.

Das Hydrogel, das die kontinuierliche wässrige Phase der erfindungsgemäßen bzw. erfindungsgemäß hergestellten porösen Partikel enthält, kann jegliches denkbare Hydrogel sein, wobei ein Hydrogel auf Basis eines organischen Polymers bevorzugt ist. Das das Hydrogel bildende organische Polymer ist vorzugsweise eines, das eine Vielzahl von Hydroxygruppen aufweist. In einer ganz besonderen Ausführungsform der vorliegenden Erfindung wird das Hydrogel von einem Polymer auf Basis von Polyvinylalkohol gebildet.

Das erfindungsgemäße Kompositmaterial wird vorzugsweise durch ein Verfahren hergestellt, das die folgenden Schritte umfasst:
(a) Herstellen einer wässrigen Lösung, die ein zur Bildung eines Hydrogels befähigtes Polymer und einen Zusatzstoff enthält;
(b) Zugeben von erfindungsgemäßen porösen Partikeln bzw. erfindungsgemäß hergestellten porösen Partikeln zu der wässrigen Lösung;
(c) Entziehen von Wasser aus der wässrigen Lösung aus Schritt (b) bis zu einem Wassergehalt von maximal 50 Gel.-%, bezogen auf die Gesamtmenge der wässrigen Lösung nach Wasserentzug, wobei eine Phasentrennung in eine wässrige, den Zusatzstoff enthaltende Phase und eine Phase, die das zur Bildung eines Hydrogels befähigten Polymers in Form eines Hydrogels aufweist, erfolgt, wobei das Hydrogel die porösen Partikel enthält; und
(d) Trennen der beiden Phasen unter Erhalt des Kompositmaterials.

Das zur Bildung eines Hydrogels befähigte Polymer ist vorzugsweise ein organisches Polymer, das eine Vielzahl von Hydroxy-Gruppen enthält. Besonders bevorzugt wird hier Polyvinylalkohol verwendet.

Die Konzentration des zur Bildung eines Hydrogels befähigten Polymers in der wässrigen Lösung in Schritt (a) liegt vorzugsweise im Bereich von 4 bis 30 Gew.-%, stärker bevorzugt 6 bis 16 Gew.-%, bezogen auf das Gesamtgewicht der wässrigen Lösung.

Der in Schritt (a) verwendete Zusatzstoff ist vorzugsweise einer, dessen Affinität zu Wasser wenigstens vergleichbar mit der Affinität zu Wasser des zur Bildung eines Hydrogels befähigten Polymers ist. Beispiele für den in Schritt (a) des erfindungsgemäßen Verfahrens eingesetzten Zusatzstoffs sind Celluloseester, Celluloseether, Stärkeester, Stärkeether, Polyalkylenglykolether, Polyalkylenglykole, langkettige Alkohole (n ≥ 8), Zuckerester und Zuckerether, wobei als Zusatzstoff Polyethylenglykol bevorzugt ist.

Der in Schritt (a) des erfindungsgemäß Verfahrens eingesetzte Zusatzstoff wird vorzugsweise in einer Konzentration im Bereich von 4 bis 20 Gel.-%, stärker bevorzugt 6 bis 10 Gew.-% eingesetzt, bezogen auf das Gesamtgewicht der wässrigen Lösung.

Das Entziehen des Wassers (Schritt c) kann in einer bevorzugten Variante auch bis zu einem Restwassergehalt von 10 bis 30 Gel.-% durchgeführt werden. Das Entziehen von Wasser aus der wässrigen Lösung wird vorzugsweise nach dem Eingießen der Lösung in eine Gießform durchgeführt, die vorzugsweise genau die erwünschte Form der zu erhaltenden Kompositmaterialien enthält.

Nach der Trennung der beiden Phasen in Schritt (d) wird ein Kompositmaterial erhalten, das anschließend vorzugsweise in Leitungswasser bzw. in einer Salzlösung rückgequollen wird.

Alternativ zu dem genannten erfindungsgemäßen Verfahren zur Herstellung eines Kompositmaterials, kann dieses auch durch ein alternatives Verfahren mit den folgenden Schritten hergestellt werden:
(a) Dispergieren der erfindungsgemäßen porösen Partikel bzw. der erfindungsgemäß hergestellten porösen Partikel in einer wässrigen Phase, die ein Vernetzungsmittel, eine durch ein Vernetzungsmittel vernetzbare Vorstufe eines Hydrogels oder eine thermisch vernetzbare Vorstufe eines Hydrogels enthält unter Erhalt einer Dispersion;
(b) Bildung eines Kompositmaterials aus der unter (a) erhaltenen Dispersion, wobei
   (b1) die ein Vernetzungsmittel enthaltene Dispersion zur Verkapselung mit einer im Wesentlichen wasserunlöslichen, ionenpermeablen Hülle in eine Lösung eingebracht wird, die eine durch das Vernetzungsmittel vernetzbare Gelvorstufe eines wasserunlöslichen, ionenpermeablen Hüllmaterials enthält, oder
   (b2) die eine durch Hitze oder Kälte thermisch vernetzbare Vorstufe eines Hydrogels enthaltende Dispersion zur Ausbildung diskreter Gelteilchen in eine flüssige Phase eingebracht wird, die eine zur thermischen Vernetzung der Gelvorstufe ausreichend hohe oder tiefe Temperatur besitzt, oder
   (b3) die eine durch Vernetzungsmittel vernetzbare Vorstufe eines Hydrogels enthaltende Dispersion in eine das Vernetzungsmittel enthaltende Lösung eingebracht oder das Vernetzungsmittel in die Dispersion eingearbeitet wird.

Eine weitere Ausführungsform der vorliegenden Erfindung betrifft die Verwendung der erfindungsgemäßen porösen Partikel bzw. der erfindungsgemäß hergestellten porösen Partikel sowie des erfindungsgemäßen Kompositmaterials zur Reinigung von organischen Molekülen oder zur Abtrennung von Metall-haltigen Ionen aus Lösungen. Hierbei werden die erfindungsgemäßen porösen Partikel bzw. erfindungsgemäß hergestellten porösen Partikel vorzugsweise in chromatographischen Verfahren verwendet, die die Reinigung von organischen Molekülen oder die Abtrennung von Metall-haltigen Ionen aus Lösungen, stärker bevorzugt die Reinigung von organischen Molekülen erlauben. Das erfindungsgemäße Kompositmaterial wird vorzugsweise zur Abtrennung von Metall-haltigen Ionen aus Lösungen verwendet und kann beispielsweise auf einfache Art und Weise in einem Rührkessel bzw. in einer *"fluidized bed"*-Anwendung verwendet werden, bei der das Kompositmaterial einfach in eine Metall-enthaltende Lösung hineingegeben und für eine bestimmte Zeit gerührt wird, wobei die Metall-haltigen Ionen aus der Lösung sich in dem Kompositmaterial abscheiden.

Bei der erfindungsgemäßen Verwendung kann es zudem bevorzugt sein, dass das rein aus organischem Material bestehende Kompositmaterial bzw. die porösen Partikel nach deren Verwendung zum Binden von Metallen zur Rückgewinnung der Metalle rückstandsfrei verbrannt werden, so dass die Metalle auf diese Art und Weise wiedergewonnen werden können.

In anderen Worten betrifft die vorliegende Erfindung also auch ein Verfahren zur Reinigung von organischen Molekülen oder zur Abtrennung von Metall-haltigen Ionen aus Lösungen, wobei eine Lösung mit einem erfindungsgemäßen porösen Partikel bzw. einem erfindungsgemäß hergestellten porösen Partikel oder einem erfindungsgemäßen Kompositmaterial in Kontakt gebracht wird.

Bei den Lösungen, aus denen Metall-haltige Ionen gebunden werden sollen, kann es sich erfindungsgemäß um konzentrierte oder verdünnte wässrige oder nicht-wässrige, saure, basische oder neutrale Lösungen handeln.

Bei den Metall-haltigen Ionen, die aus diesen Lösungen erfindungsgemäß gewonnen werden sollen bzw. gebunden werden sollen, handelt es sich vorzugsweise um Metalle, die in ionischer Form (Metallionen) bzw. auch als Metall-Ligand-Koordinationsverbindungen in ionischer Form in den genannten Lösungen vorliegen. Die Metalle sind vorzugsweise komplexbildende Metalle, d.h. Metalle, die eine Metall-Ligand-Koordinationsbindung eingehen können. Stärker bevorzugt sind die Metalle Übergangsmetalle bzw. Metalle der seltenen Erden, noch stärker bevorzugt Edelmetalle bzw. seltene Erden. Ganz bevorzugt sind die Metalle Kupfer, Nickel und Chrom.

In einer weiteren Ausführungsform der erfindungsgemäßen Verwendung sind die Lösungen, aus denen die Metall-haltigen Ionen gebunden werden sollen, Lösungen, die einen Salzgehalt von Alkalionen von mindestens 5 g/l aufweisen.

Weiterhin sind die Lösungen, aus denen die Metall-haltigen Ionen gebunden werden sollen, vorzugsweise wässrige Lösungen, insbesondere auch eine saure wässrige Lösung, mit einem pH-Wert von ≤ 5, stärker bevorzugt ≤ 4 und noch stärker bevorzugt ≤ 3.

Die vorliegende Erfindung betrifft auch eine Filterkartusche, beispielsweise zur Aufbereitung von Trinkwasser, die erfindungsgemäße poröse Partikeln aus einem vernetzten Polymer oder das erfindungsgemäße Kompositmaterial enthält. Vorzugsweise enthält die erfindungsgemäße Filterkartusche jedoch das erfindungsgemäße Kompositmaterial. Die Filterkartusche ist vorzugsweise derart ausgeformt, dass das aufzubereitende Trinkwasser durch die Kartusche hindurchlaufen kann und in ihrem Inneren mit den erfindungsgemäßen porösen Partikeln aus einem vernetzten Polymer oder dem erfindungsgemäßen Kompositmaterial in Kontakt kommt, wobei Metall-haltige Ionen aus dem Wasser entzogen werden.

Die Filterkartusche kann zusätzlich ein Material zum Entfernen von Mikroschadstoffen enthalten. Hierfür wird vorzugsweise Aktivkohle eingesetzt. Dabei können die verschiedenen Materialien in getrennten Zonen innerhalb der Filterkartusche angeordnet sein, oder in einer Mischung aus den beiden Materialien.

Die Filterkartusche kann in allen denkbaren Größen ausgestaltet sein. Beispielsweise kann die Filterkartusche in einer Größe ausgestaltet sein, die für den täglichen Trinkwasserbedarf in einem Haushalt ausreicht. Die Filterkartusche kann aber auch eine Größe aufweisen, die es erlaubt den Trinkwasserbedarf für mehrere Haushalte zu decken, d.h. beispielsweise einen Bedarf von mehr als 5 Liter täglich.

Um neben Metall-haltigen Ionen und Mikroschadstoffen auch Schwebstoffe aus dem Wasser entfernen zu können, kann die Filterkartusche auch eine Membran enthalten, die Schwebstoff filtriert.

Die vorliegend Erfindung soll nun anhand der folgenden Figuren und Beispiele erläutert werden, die jedoch nur als exemplarisch anzusehen sind:
Abbildungen der Figuren:
   - Figur 1:: Fig. 1 zeigt eine Fotoaufnahme von porösen Partikel eines erfindungsgemäßen vernetzten Polymers.
   - Figur 2:: Fig. 2 zeigt eine Isotherme mit der gebundenen Menge Cu²⁺ in Abhängigkeit von der Cu²⁺-Konzentration in Lösung.

Figuren 3-10 zeigen darüber hinaus Messergebnisse aus den Anwendungsversuchen.

### Beispiele:

### Analytische Verfahren:

Bestimmung der Konzentration der Amino-Gruppen eines Sorbens mit Durchbruchsmessung mit 4-Toluolsulphonsäure (Titrationsanalyse):
   Die dynamische Anionenaustauschkapazität wird mit einer Säule der zu prüfenden stationären Phase bestimmt. Hierzu werden zunächst alle austauschbaren Anionen in der Säule gegen Trifluoracetat ausgetauscht. Dann wird die Säule mit einer wässrigen Reagenzlösung von Toluol-4-Sulphonsäure durchspült, bis diese Lösung in gleicher Konzentration am Ende der Säule wieder austritt (Durchbruch). Aus der Konzentration der Toluol-4-Sulphonsäurelösung, der Flussrate und der Fläche des Durchbruchs im Chromatogramm wird die von der Säule gebundene Menge Toluol-4-Sulphonsäure berechnet. Die so ermittelte Menge an Toluol-4-Sulphonsäure gibt die Konzentration der Amino-Gruppen des Sorbens an.

Die dynamische Anionenaustauschkapazität für Toluol-4-Sulphonsäure in Wasser wird auf das Phasenvolumen bezogen und in mmol pro Liter (mM/L) berichtet.

### Beispiel 1: Herstellung von erfindungsgemäßen porösen Partikeln eines vernetzten Polymers:

Es wird zunächst ein Kieselgelträger folgendermaßen mehrfach mit Polyvinylamin beschichtet:

### 1. Beschichtung

5000 g Kieselgel M.S Gel D50-120A (WAK 1,08 mL/g) werden in die 20 L Trommel eines Lödige VT 20 Pflugscharmischer gefüllt. Parallel wird eine Polyvinylaminpolymerlösung hergestellt. Dazu werden 4946 g eines 10,1 %igen wässrigen Polyvinylaminlösung (PVA-Lösung) eingewogen. Durch Zugabe von 245 g 32% Salzsäure wird der pH-Wert der Polymerlösung auf 9,5 eingestellt. Anschließend werden 243 g Wasser zugegeben. Diese PVA-Lösung wird innerhalb von 30 min langsam zu dem Kieselgel in der Mischtrommel (Drehzahl des Mischwerkzeuges 120 UPM) zugegeben. Anschließend wird das beschichtete Kieselgel noch 30 min gemischt. Das beschichtete Polymeradsorbat wird für 24 h bei Raumtemperatur gelagert. Die Trommel des Pflugscharmischers wird auf 60 °C erwärmt. Anschließend wird das Lösungsmittel im Lödigetrockner bei 30 mBar zur Gewichtskonstanz getrocknet. Die Ausbeute beträgt 5573 g an Polymeradsorbat.

### 2. Beschichtung

Das getrocknete Polymeradsorbat (5573g) wird ein zweites Mal in der Mischtrommel des Lödige VT 20 Pflugscharmischers beschichtet. Für die Herstellung der Polymerlösung für die Beschichtung werden 3956 g 12,6 %ige PVA-Lösung eingewogen und der pH Wert der Lösung wird durch die Zugabe von 278 g 32 %iger Salzsäure auf 9,5 eingestellt. Anschließend werden 704 g Wasser zugegeben. Die Beschichtungslösung wird innerhalb von 30 min zu dem Polymeradsorbat in der Trommel des Pflugscharmischers (Drehzahl 120 Upm) mit einer Schlauchpumpe zudosiert. Das Polymeradsorbat wird für 30 min gemischt und anschließend für 24 h gelagert. Die Trommel des Pflugscharmischers wird auf 60° C erwärmt. Das feuchte Polymeradsorbat wird im Lödige Trockner unter vermindertem Druck (30 - 50 mBar) zur Gewichtskonstanz getrocknet. Die Ausbeute beträgt 6115 g an Polymeradsorbat.

### 3. Beschichtung

Das getrocknete Polymeradsorbat (6115g) wird ein weiteres Mal in der Mischtrommel des Lödige VT 20 Pflugscharmischers beschichtet. Für die Herstellung der Polymerlösung für die Beschichtung werden 3967 g 12,6 % ige PVA Polymerlösung eingewogen und der pH Wert der Lösung wird durch die Zugabe von 264 g 32 %iger Salzsäure auf 9,5 eingestellt. Anschließend werden 204 g Wasser zugegeben. Die Beschichtungslösung wird innerhalb von 30 min zu dem Polymeradsorbat in der Trommel des Pflugscharmischers (Drehzahl 120 Upm) mit einer Schlauchpumpe zudosiert. Das Polymeradsorbat wird für 30 min gemischt und anschließend für 24 h gelagert. Die Trommel des Pflugscharmischers wird auf 60° C erwärmt. Das feuchte Polymeradsorbat wird im Lödige Trockner unter vermindertem Druck (30 - 50 mBar) zur Gewichtskonstanz getrocknet. Die Ausbeute beträgt 6670 g an Polymeradsorbat.

### Vernetzung des Polymers und Auflösen des Trägers:

500 g Polymeradsorbat werden in einen 2 L Kolben eingewogen. Anschließen werden 129 g Epichlorhydrin gelöst in 200 mL 2-Propanol zugegeben und das Pulver für 24 h bei 60 ° C gemischt. Anschließend werden 1 L 25%ige Natronlauge zugesetzt und die Suspension 4 h gemischt. Die erhaltene Suspension wird auf einer Filterfritte mit folgenden Lösungsmitteln gewaschen: 2 L 1 M Natronlauge, 2 L vollentsalztes Wasser, 2 L 2 M Salzsäure in Wasser, 2 L vollentsalztes Wasser, 4 L 1 M Natronlauge, 4 L Wasser.

### Ausbeute: 1 L Templatphase (MetCap T-Phase, PVA-Phase) Anionenkapazität: 1808 mM/mL

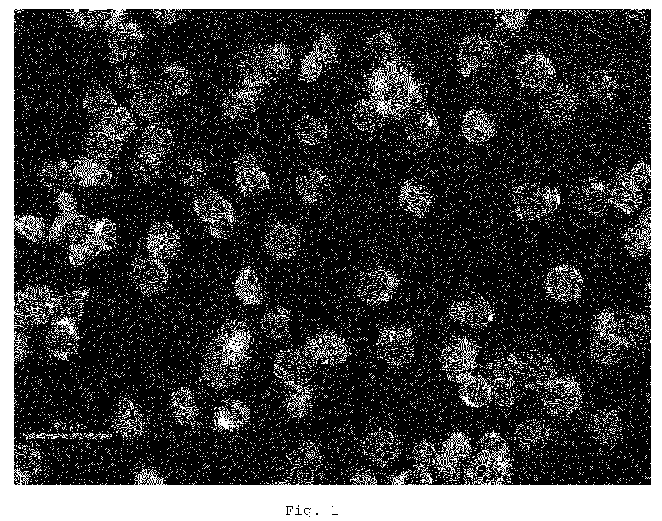

Fig. 1 zeigt eine Fotoaufnahme des erfindungsgemäßen vernetzten porösen Polymers in Partikelform mit einem Durchmesser zwischen 10 und 50 µm.

### Beispiel 2: Herstellung eines erfindungsgemäßen Kompositmaterials:

Es werden linsenförmige Gelkörper gemäß der DE 198 27 552 C1 hergestellt, die das vernetzte poröse Polymer gemäß Beispiel 1 enthalten.

### Beispiel 3: Verwendung des erfindungsgemäßen Kompositmaterials zur Abtrennung von Metallen aus Lösungen:

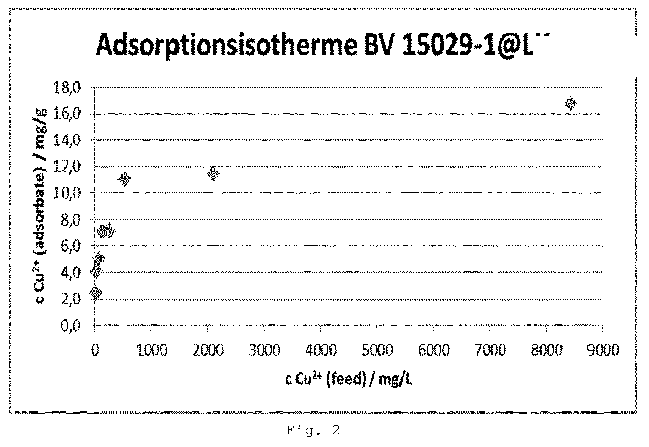

Zur Abreicherung von Cu²⁺ aus wässriger Lösung werden 1 mL einer Suspension, die 50 mg der linsenförmigen Gelkörper nach Beispiel 2 enthält, mit 2,5 mL wässriger Cu²⁺-Lösung für 24 h inkubiert. Der Überstand der Lösung wird abgetrennt und der Analytik mittels FAAS zugeführt. Tabelle 1 zeigt die gebundene Menge an Cu²⁺. Fig. 2 zeigt eine Isotherme mit der gebundenen Menge Cu²⁺ in Abhängigkeit von der Cu²⁺-Konzentration in Lösung.

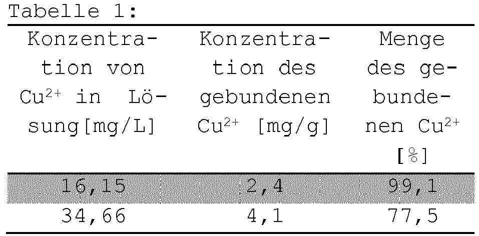

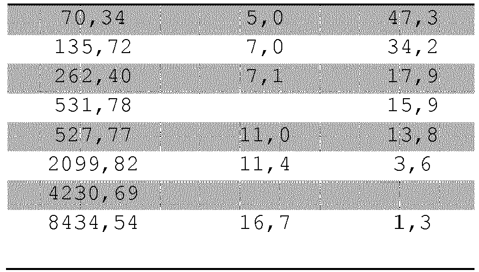

### Anwendungsbeispiele A1-All

### Beispiel Al: Trinkwasseranwendung/Kombination von verschiedenen Phasentypen in einer Kartusche

### (Quelle: HV 16012)

Für die Trinkwasserreinigung werden mehrere MetCap T-Phasentypen kombiniert (mindestens 2, PVA Grundphase und NTA), um einen möglichst breiten Bereich des Schwermetallspektrums effektiv und sicher abdecken zu können.

### Experimentelles:

Zu 50 1 Leitungswasser werden 98 mg CuSO₄ x 5 H₂O und 101 mg NiCl₂ x 6 HPO und intensiv gemischt, so dass sich eine Konzentration von je 5 ppm des Schwermetalls ergibt. Die Lösung wird anschließend mit einer Flussrate von 45 ml/min (2,7 1/h, 10 Bettvolumen/ h) durch eine Kartusche (4.4 x 18 cm, leicht konisch, Volumen: ≈ 274 ml) gepumpt, die MetCap T-Amino-Grundphase und MetCap T-NTA-Phase enthält. Der Effluent wird in Fraktionen aufgefangen. Die Fraktionen werden mit AAS bzw. Küvetten-Test von Hach-Lange auf die Schwermetalle untersucht.

Hach-Lange Tests:
- Kupfer, LCK 529, 0.01-1.0 Cu
- Nickel, LCK 537, 0.05-1.0 mg/L Ni

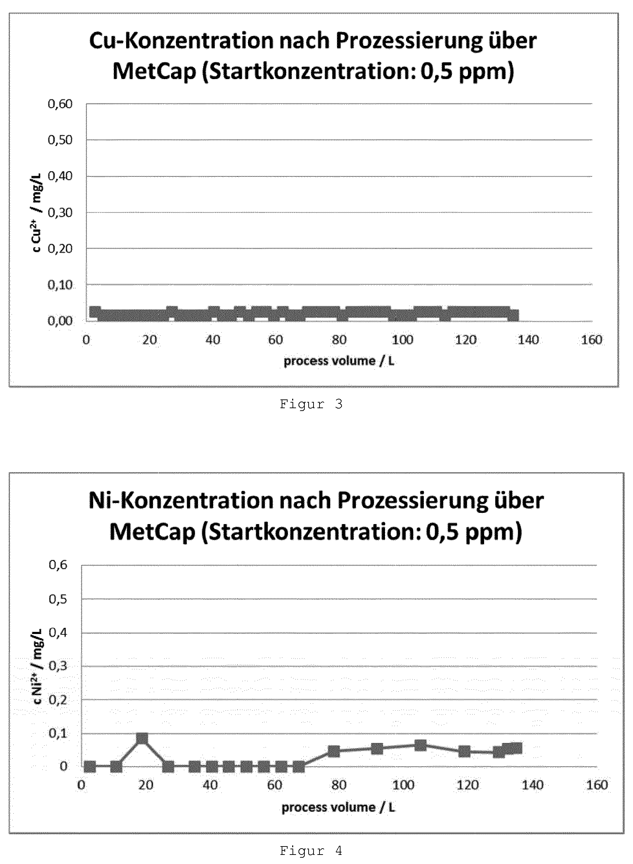

Kupfer wird zusätzlich mit dem AAS untersucht.
Die Ergebnisse der Untersuchungen sind in den Figuren 3 und 4 dargestellt.

Sowohl Kupfer als auch Nickel mit einer Anfangskonzentration von jeweils 0,5 ppm in Leitungswasser werden über den gesamten Beobachtungsbereich stark reduziert, teilweise unter die Nachweisgrenze der analytischen Methoden.

### Beispiel A2: Trinkwasseranwendung/Kombination von verschiedenen Phasentypen in einer Kartusche

Die Kapazitätsbestimmung der Trinkwasserkartusche mit konzentrierter Kupferlösung ergibt eine sehr hohe Beladbarkeit pro ml und funktioniert auch bei unterschiedlichen Flussraten. Eine Abnahme der Kapazität wird mit steigender Flussrate nicht beobachtet.

### Experimentelles:

Eine Lösung von 800 ppm Kupfer (als CuSO₄ x 5 H₂O) wird bei unterschiedlichen Flussraten (10 - 100 Bettvolumen pro Stunde, BV/h) durch eine Kartusche (4.4 x 18 cm, leicht konisch, Volumen: - 274 ml) gepumpt, die MetCap T-Amino-Grundphase und MetCap T-NTA-Phase enthält. Der Effluent wird in Fraktionen aufgefangen. Die Fraktionen werden mit AAS auf Kupfer untersucht.

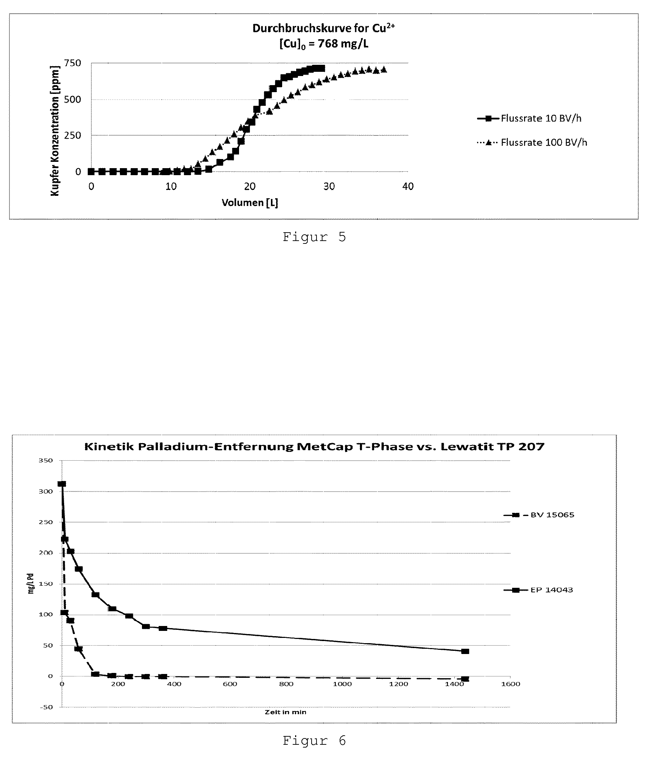

Figur 5 zeigt den Verlauf der Kupferkonzentration im Effluenten bei unterschiedlichen Flussraten von 10 bzw. 100 Bettvolumen pro Stunde (BV/h)

Die beiden Kurven schneiden sich in etwa in Höhe des Wendepunktes. Dies bedeutet, dass die Beladungskapazität unabhängig von der Flussrate ist. Der 1%-Durchbruch bei einer Flussrate von 100 BV/h liegt ein wenig vor dem 1%-Durchbruch der Flussrate bei 10 BV/h. Hierfür könnten kinetische Gründe ausschlaggebend sein. Gleichwohl bleibt die absolute Kapazität der Systems unangetastet.

### Beispiel A3: Universalität (PSE)

### Quelle: HV 15091

Die MetCap T-Phase - als Amino-Phase, sowie die derivatisierten Spezial-Phasen - zeichnen sich durch eine enorme Anwendungsbreite aus: Alle Schwermetalle sind zur Ausbildung chemischer Komplexe fähig. Die MetCap-T-Phasen liefern die Liganden für diese chemische Komplexe und können somit auf alle Schwermetalle angewendet werden. Da Alkali- und Erdalkali-Metalle in der Regel nur sehr schwache chemische Komplexe ausbilden, werden sie normalerweise nicht gebunden. Darin liegt der wesentliche Unterschied zu Ionenaustauschern, die alle Arten von geladenen Spezies binden und dementsprechend weniger selektiv sind.

Die nachfolgenden Daten illustrieren anhand von 12 repräsentativen Schwermetallen die unbegrenzte Anwendungsbreite für diese Art von Elementen im Periodensystem.

### Experimentelles:

100 mg der entsprechenden Phasen werden eingewogen und mit 5 ml einer wässrigen 10 ppm, 100 ppm und 1000 ppm Lösung des jeweiligen Metallsalzes versetzt und 24 h bei 20°C geschüttelt. Anschließend wird mit dem AAS die Konzentration des Schwermetalls im Überstand bestimmt.

**Tabelle 2:**

| HV 15091 | Konzntration [ppm] | **Pd** | **Au** | **Ag** | **Cu** | **Pb** | **Zn** | **Pt** |
|---|---|---|---|---|---|---|---|---|
| MetCap T [BV 15047] | 10 | 0,5 | 0,0 | 0,0 | 0,0 | 0,0 | 0,3 | 0,0 |
| | 100 | 1,6 | 0,0 | 0,0 | 0,0 | 0,0 | 0,0 | 0,0 |
| | 1000 | 17,8 | 0,0 | 0,0 | 0,0 | 0,0 | 0,6 | 0,0 |

Eine Restkonzentration an Metallen im Überstand ist in den meisten Fällen mit dem AAS nicht mehr nachweisbar. Lediglich für Palladium und Zink werden noch geringe Restkonzentrationen gefunden. Die MetCap T Phase zeigt für die insbesondere für die wertvollen Edelmetalle Gold, Silber, Kupfer, Blei und Platin eine vollständige Bindung, selbst bei einer Angebotskonzentration von 1000 ppm.

### Quelle: HV 16009

### Experimentelles:

100 mg der entsprechenden Phasen werden eingewogen und mit 5 ml einer wässrigen 10 ppm und 100 ppm Lösung des jeweiligen Metallsalzes versetzt und 24 h bei 20°C geschüttelt. Anschließend wird mit dem AAS die Konzentration des Schwermetalls im Überstand bestimmt .

**Tabelle 3:**

| HV 16009 | Phase | Ausgangskonz entration | Cd | Cr | Pb | Hg | As |
|---|---|---|---|---|---|---|---|
| EP 16001 | TP 214 | 10ppm | 0,0 | 9,8 | 2,9 | - | 8,3 |
| | | 100ppm | 4,7 | 102,0 | 12,4 | 0 | 91,8 |
| BV 15069 | MetCap T | 10ppm | 0,3 | 6,0 | 2,1 | - | -1,7 |
| | | 100ppm | 1,1 | 29,9 | 0,8 | 0 | 8,8 |

| | | | | | | | |
|---|---|---|---|---|---|---|---|
| TP214: Lewatit® MonoPlus TP 214 ist ein monodisperes, makroporöses Chelatharz mit Thioharnstoffgruppen (Hersteller Lanxess): BV 15069: MetCap T | | | | | | | |

Die Tabelle zeigt einen Vergleich der Abreicherung von toxischen Schwermetallen zwischen der MetCap T-Phase und einer kommerziellen Vergleichsphase eines Wettbewerbers (Inkubation bei Raumtemperatur).

In alle Fällen (mit Ausnahme von Quecksilber, in der beide Phasen sehr gut abschneiden), ist die nachweisbare Restmenge an toxischem Schwermetall im Falle der MetCap T-Phase geringer als auf dem kommerziellen Vergleichsgel.

### Beispiel 4: Nickel dynamische Bindung in hohen Konzentrationen

### Quelle AL 16001

### Experimentelles:

Eine wässrige Lösung von 500 pm Nickel (pH4) wird mit einer Flussrate von 1 ml/min durch eine mit der entsprechenden Phase gefüllten Säule (33,5 x 4 mm) gepumpt. Der Effluent wird bei 720 nm in einer Durchflusszelle untersucht.

Die Ergebnisse der Messungen sind in der nachfolgenden Tabelle 4 zu sehen:

**Tabelle 4:**

| | Vergleichsphasen auf PS-Basis | | MetCap T-Phasen | | |
|---|---|---|---|---|---|
| | NH2 | NTA | NH2 | EtSH | NTA |
| AL 16001 | PV 150002 | PV 160116 | PV 160097 | PV 160129 | PV 160130 |
| Nickel | BV 14171 | ND 160036 | BV 16016 | ND 160035 | ND 160037 |
| 500 pm pH4 | Polystyrol Amino-Typ | Polystyrol Nitrilotriessigsäure-Typ | MetCap T Amino-Typ | MetCap T Ethanthiol-Typ | MetCap T Nitrilotriessigsäure-Typ |
| DBC mg/ml | 11,34 | 10,19 | 26,86 | 27,15 | 32,16 |

Die MetCap-T-Phasen zeigen eine 2-3fach höhere Nickel-Kapazität als die vergleichbaren polystyrol-basierten (PS) Phasen.

### Beispiel 5: Kupfer dynamische Bindung in hohen Konzentrationen HV 15090:

Besonderheit: Die Herstellungsweise der Grundphase, sowie Derivatisierungen haben einen starken Einfluss auf Bindeeigenschaften der MetCap T-Phasen:

### Experimentelles:

Eine wässrige Lösung von 800 ppm Kupfer (pH 5) wird bei einer Flussrate von 1 ml/min durch eine mit der entsprechenden Phase gefüllten Säule (33,5 x 4 mm) gepumpt. Der Effluent wird bei 790 nm in einer Durchflusszelle untersucht.

**Tabelle 5:**

| | | | | | | | | | | | |
|---|---|---|---|---|---|---|---|---|---|---|---|
| Cu | PV 150679 | PV 150710 | PV 150711 | PV 150737 | PV 150738 | PV 150739 | PV 150759 | PV 150760 | PV 150761 | PV 150762 | PV 160007 |
| 800 pppm | BV 15062 | BV15065 | BV 15067 | ND 150196 | ND150197 | ND 150198 | ND 150202 | ND 150203 | ND 150204 | ND 150205 | BV 15083 |
| pH5 1 ml/min | MetCap T Amino-Typ | MetCapT Amino-Typ | MetCapT Amino-Typ | MetCapT Methyl-Thioharn-stoff Typ | MetCapT Nitrilotriessigs äure-Typ | MetCapT iso-Nicotinsäure-Typ | MetCapT Ethanthiol-T_{V}p | MetCapT Methyl-Thioharn-stoff Typ | MetCapT Nitrilotriessigs äure-Typ | MetCapT iso-Nicotinsäure-Typ | MetCapT Amino-Typ |
| nBC mg/ml | 57,14 | 63,54 | 49,31 | 21,66 | 25,78 | 26,36 | 30,55 | 30,54 | 45,95 | 48,23 | 53,24 |

### HV 15106:

Besonderheit: Durch die Einführung bestimmter Liganden/Bindegruppen wird die Bindekapazität für Nickel aus wässriger Lösung stark erhöht:

Die Derivatisierung mit EtSH-, NTA- bzw. MeSHAr-Gruppen führt zu einer Steigerung der Beladbarkeit um 64%, 81% bzw. 55'=:

**Tabelle 6;**

| HV 15106 | PV 150723 | PV 150759 | PV 150761 | PV 150760 |
|---|---|---|---|---|
| Nickel | BV 15068 | ND 150202 | ND 150204 | ND 150203 |
| 500 ppm 1 ml/min | MetCap T Amino-Typ | MetCap T Ethanthiol-Typ | MetCap T Nitrilotriessigsäure-Typ | MetCap T Methyl -Thioharn-stoff-Typ |
| DBC mg/mL | **9,76** | **16,15** | **17,63** | **15,09** |

Die Technologie ist daher als eine Plattformtechnologie zu begreifen, die es ermöglicht, die Eigenschaften der Phasen auf bestimmte Aufgabenstellungen anzupassen: Soll zum Beispiel Nickel aus wässriger Lösung gebunden werden, sind derivatisierte Phasen der reinen Amino-Grundphase vorzuziehen.

### Beispiel A6: Bindung von Palladium unter statischen Bedingungen aus wässrig-organischer Lösung

Quelle: HV 15097 - Kinetik mit Vergleich zu EP 14043 LewatitTP207 (Hersteller: Lanxess; Träger: Polystyrol; Ligand: Iminodiessigsäure)

### Besonderheit:

Aufgrund ihres günstigen Strömungsverhaltens und den optimierten Diffusionswegen gelingt mit den MetCap-T-Phasen die Aufnahme von Metallen viel schneller, als mit herkömmlichen Materialien.

### Experimentelles:

Eine Lösung von 320 ppm Palladium in Wasser/Acetonitril/Isopropanol wird 9x mit je 100 mg der Phasen inkubiert. Der Überstand wird nach 10 min, 30 min, 1 h, 2 h, 3h, 4h, 5 h, 6 h und 24 h abgenommen und die Palladium-Konzentration wird mit dem AAS bestimmt. Das Ergebnis der Untersuchungen ist in der Figur 6 zu sehen.

BV 15065 VPVA120/50-20-ECH
EP 14043 Lewatit TP 207 (Iminodiessigsäure)
Nach ca. 10 min ist die Konzentration des Palladiums im Falle der MetCap T-Inkubationsreihen auf ca. 50% des Ausgangswerts gefallen. Nach ca. 100 min sinkt die Konzentration in dieser Serie unter die Nachweisgrenze des AAS (lod AAS 0,25 ppm). Im Falle der Wettbewerberphase sinkt die Konzentration weitaus langsamer ab (Halbwertszeit ca. 3 h) und erreicht auch nach 24 h nur einen viel höheren Wert, der auf eine unvollständige Bindung in endlicher Zeit verweist.

Das Ergebnis zeigt, dass die Anwendung der instrAction-MetCap-Harze nicht auf rein wässrige Systeme beschränkt ist.

### Beispiel A7: Dynamische Bindung von Metallen: Platin, Blei, Rhodium

### Quelle: HV 15088: Platin Durchbruch

### Besonderheit:

Die sehr starke Bindung des Platins (bei pH 1,1) ist größtenteils reversibel. Die Phase kann auf diese Weise immer wieder eingesetzt werden. Eine Wiedergewinnung des Platins ist ohne Verbrennung möglich. Aufgrund der sehr starken Bindung können auch Lösungen mit sehr niedriger Konzentration effektiv und mit hoher Ausbeute (hier 100%) bearbeitet werden.

### Experimentelles:

Es wird eine Peek-Säule des Formats 30 x 4,6 mm mit MetCap T (Batch BV 15047) gepackt und mit einer Lösung von ca. 60 ppm Platin Wasser (pH 1,1) bei einer Flussrate von 1 ml/min durchspült.

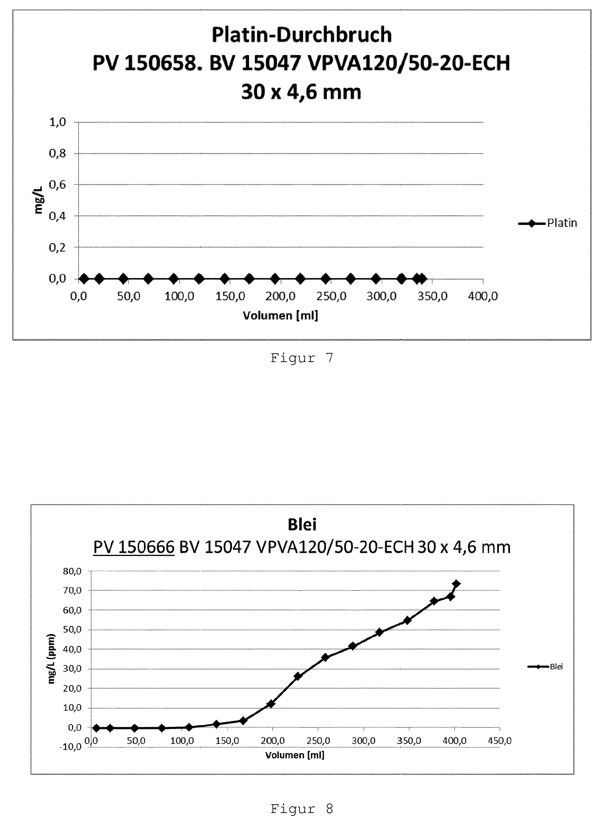

Der Effluent wird aufgefangen und mit dem AAS auf Platin untersucht. Das Ergebnis ist in der Figur 7 dargestellt.

Über das gesamte Durchbruchsvolumen von ca. 350 ml hinweg wurde kein Platin in der Lösung gefunden (limit of detection: AAS 5 ppm). Somit wurden ca. 35 mg Platin von der Säule absorbiert. Das entspricht > 75 mg Palladium/ml Phase. Die Aufnahmekapazität der Phase wurde in diesem Experiment nicht erreicht.

Durch Elution mit 50ml 1M HNO₃ wurden 77% des gebundenen Platins wiedergewonnen.

### Blei-Durchbruch

### Quelle: HV 15088:

### Experimentelles:

Es wird eine Peek-Säule des Formats 30 x 4,6 mm (0,5 ml) mit MetCap T (Batch BV 15047) gepackt und mit einer Lösung von ca. 80 ppm Blei in Wasser (pH 5) bei einer Flussrate von 1 ml/min durchspült. Der Effluent wird aufgefangen und mit dem AAS auf Blei untersucht. Das Ergebnis ist in Figur 8 dargestellt.

In den ersten ca. 110 ml ist Blei nicht nachweisbar (lod AAS: 0,5 ppm). Dann beginnt ein schleichender Durchbruch. Erst nach ca. 400 ml (800 Bettvolumina) wird die Ausgangskonzentration von ca. 80 ppm erreicht.

Das gebundene Blei kann durch 1 M HNO₃ nicht von der Phase eluiert werden.

Damit ist gezeigt, dass die Technologie nicht nur auf Nebengruppenelemente und Edelmetalle angewendet werden kann, sondern auf alle Elemente, die zur Komplexbildung befähigt sind.

### Rhodium Durchbruch HV 15088

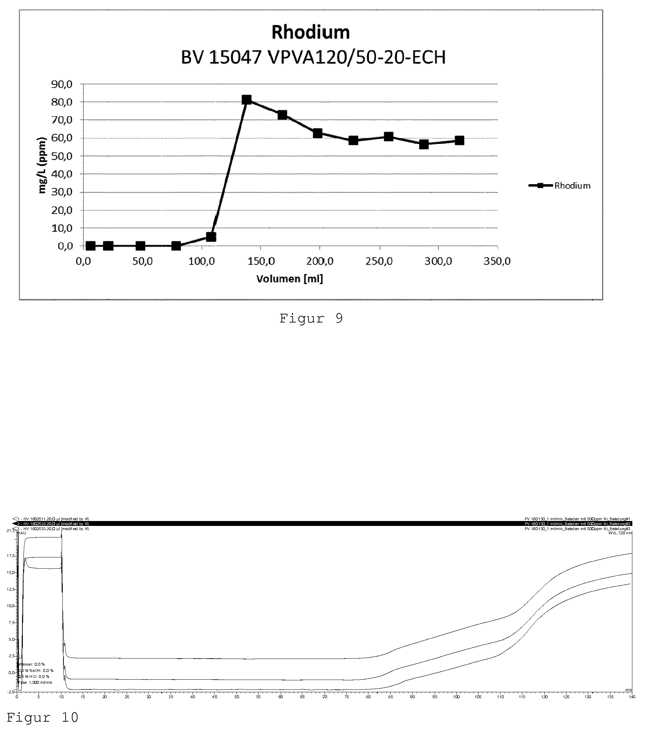

Es wird eine Peek-Säule des Formats 30 x 4,6 mm (0,5 ml) mit MetCap T (Batch BV 15047) gepackt und mit einer Lösung von ca. 60 ppm Rhodium in Wasser (pH 5) bei einer Flussrate von 1 ml/min durchspült. Der Effluent wird aufgefangen und mit dem AAS auf Rhodium untersucht. Das Ergebnis ist in der Figur 9 dargestellt.

In den ersten ca. 110 ml (220 Bettvolumina) ist Rhodium nicht nachweisbar (lod AAS: 0,5 ppm). Dann beginnt ein schleichender Durchbruch. Nach ca. 150 ml (300 Bettvolumina) wird die Ausgangskonzentration von ca. 60 ppm erreicht.

Mit 1 M HNO₃ kann kein Rhodium von der Phase eluiert werden.

### Beispiel A8: Silber aus wässriger Lösung in einer Rührkessel-Kaskade

### Quelle: HV 15078

Zu 100 mg der individuellen Phase werden 5 ml einer wässrigen Silbernitrat-Lösung (Konzentration 74,2 ppm) gegeben und für 24 h bei 20°C geschüttelt. Anschließend wird der Überstand abgenommen und die Silberkonzentration mit dem AAS bestimmt. Der Rest des Überstands wird erneut mit 100 mg frischer Phase inkubiert. Dieser Vorgang wird insgesamt viermal durchgeführt (1. bis 4. Kaskade). Die Ergebnisse der AAS-Messungen sind in der nachfolgenden Tabelle zusammengefasst:

**Tabelle 7:**

| HV 15078 | ND 150125 | PRC 15026 | PRC 14035 | ND 150091 | **BV 15047** |
|---|---|---|---|---|---|
| Trägermaterial | PSS | PSS | PSS | PSS | **MetCap T AminoType** |
| Partikelgröße µm] | 500 | 500 | 35 | 35 | **50** |
| Menge PVA [%] | 25 | 25 | 37,5 | 15 | **-** |
| Konzentration Ag | [ppm] | [ppₘ] | [ppₘ] | [ppₘ] | **[ppₘ]** |
| Start | 74,2 | 74,2 | 74,2 | 74,2 | **74,2** |
| 1. Kaskade | 47,2 | 61,0 | 45,8 | 61,9 | **22,4** |
| 2. Kaskade | 32,8 | 31,4 | 21,3 | 39,2 | **2,4** |
| 3. Kaskade | 22,3 | 25,1 | 9,9 | 24,1 | **0,0** |
| 4. Kaskade | 18,9 | 14,6 | 6,9 | 16,1 | **0,0** |
| Nach 96h ohne Wechsel | 30,7 | 37,6 | 43,2 | 69,4 | **24,3** |

Die Tabelle 7 zeigt, dass die MetCap T-Phase (letzte Spalte) als einzige der untersuchten Phasen in der Lage ist, Silber vollständig innerhalb von drei Kaskaden bis unter die Nachweisgrenze des AAS abzureichern. Bereits nach der zweiten Kaskade sind >97% des Silbers gebunden. Hier zeigt sich die Überlegenheit des MetCap T-Materials gegenüber Polystyrol-basierten Phasen: Selbst 35µm Partikel (Spalte 3 und vier) zeigen eine langsamere Kinetik und absolute Kapazität als die 50 µm MetCap T-Phase.

### Beispiel A9: Kupfer in Gegenwart von Phosphat

### Quelle: HV 15094

Zu 100 mg der individuellen Phasen werden je 5 ml einer wässrigen 10% Phosphorsäurelösung, die zuvor mit Natronlauge auf pH 3 eingestellt wurde, und je 10 und 100 ppm Eisen bzw. Aluminium enthalten gegeben und für 24 h bei 20°C geschüttelt. Anschließend wird mit dem AAS die Konzentration des Metalls im Überstand bestimmt.

**Tabelle 8:**

| **HV 15094** | **Startkonzentration** | **Fe** | **Al** |
|---|---|---|---|
| MetCap T Amino-Typ | [ppm] | [ppm] | [ppm] |
| 10% H3P04, pH 3 | 10 | 0 | 2,1 |
| 10% H3PO4, pH 3 | 100 | 0 | 11,3 |

Die Abreicherung von Eisen aus Phosphat-haltiger wässriger Lösung ist in unabhängig von der Konzentration vollständig bis unter die Nachweisgrenze (0,5 ppm) auf einer Stufe. Für Aluminium findet sich eine Abreicherung von ∼ 80-90% auf einer Stufe.

### Beispiel A10: Mangan, Nickel, Aluminium in aus wässriger, konzentrierter Salzlösung (0-2 M NaCl)

### Besonderheit:

Die Entfernung kritischer Schwermetalle aus konzentrierten Salzlösungen gelingt mit der MetCap-Phase sehr gut. Damit erschließen sich breite Anwendungsgebiete, wie in der Meerwasserentsalzung bzw. der Chloralkalielektrolyse. In beiden Fällen besteht der Hauptnutzen in der Entfernung der Schwermetalle, die die empfindlichen, in beiden Verfahren eingesetzten Membranen, schädigen.

### Quelle: HV 15095

### Experimentelles:

Es werden je drei Lösungen von Mangan (10 ppm), Aluminium (100 ppm) und Nickel (10 ppm) in 0 M, 1M, 2 M NaCl-Lösung hergestellt (insgesamt 9 Lösungen). Jeweils 5 ml dieser Lösung werden mit 100 mg der MetCap T für 24 h bei 20°C geschüttelt. Anschließend wird der Überstand abgetrennt und die Metallkonzentration im Überstand wird durch das AAS bestimmt.

**Tabelle 9:**

| | Mangan | Aluminium | Nickel |
|---|---|---|---|
| [NaCl] | [ppm] | [ppm] | [ppm] |
| Startkonzentration | 10 | 100 | 10 |
| 0M | - | 2 | 0 |
| 1M | 0 | 5 | 0 |
| 2M | 0 | 14 | 0 |

Die Tabelle zeigt, dass Mangan und Nickel vollständig aus Lösungen, unabhängig von ihrem Salzgehalt unter die Nachweisgrenze des AAS (limit of detection: Mangan: 0,1 ppm, Nickel: 0,1 ppm) entfernt werden. Die Konzentration von Aluminium wird stark reduziert, um 86-98'.

Die MetCap T-Phase bindet also Schwermetalle unabhängig von ihrem Salzgehalt. Leitmetalle, wie Aluminium, werden unter diesen Bedingungen zu 86-98% gebunden Teil gebunden.

### Beispiel A11: Regenerierbarkeit

### Besonderheit:

Die MetCap-T-Phasen können in einer Vielzahl der Anwendungsfälle ohne Einbußen an Kapazität und Selektivität oder Veränderung anderer Eigenschaften (wie Rückdruck) wieder verwendet werden:
Quelle: HV 16025

### Experimentelles:

Eine wässrige Lösung von 500 ppm Nickel (pH4) wird mit einer Flussrate von 1 ml/min durch eine mit der entsprechenden Phase gefüllten Säule (33,5 x 4 mm) gepumpt. Der Effluent wird bei 720 nm in einer Durchflusszelle untersucht. Regeneration: 80 ml 0,5 M HCl gefolgt von 80 ml 0,5 M NaOH.

In der Figur 10 sind drei in oben beschriebener Weise durchgeführte Durchbrüche übereinander gelegt.

Anhand der markanten Punkte im Chromatogramm (0%, 50%, 100% Durchbruch) erkennt man die unveränderte Kapazität und das identische Verhalten der regenerierten Phase. Die absolute Höhe der Absorption wird durch Schwankungen am Detektor verursacht.
Ein 1. Aspekt der vorliegenden Erfindung ist ein Verfahren zur Herstellung von porösen Partikeln aus einem vernetzten Polymer, das die folgenden Schritte umfasst:
   (a) Aufbringen eines organischen Polymers auf ein poröses anorganisches Trägermaterial in Partikelform;
   (b) Vernetzen des Polymers in den Poren des organischen anorganischen Trägermaterials; und
   (c) Herauslösen des anorganischen Trägermaterials unter Erhalt der porösen Partikel aus einem vernetzten organischen Polymer.
Ein 2. Aspekt der vorliegenden Erfindung ist ein Verfahren nach Aspekt 1, worin in Schritt (a) der Anteil an Polymer bei mindestens 5 Gel.-% liegt, bezogen auf das Gewicht des porösen anorganischen Trägermaterials ohne Polymer.
Ein 3. Aspekt der vorliegenden Erfindung ist ein Verfahren nach Aspekt 1 oder 2, worin in Schritt (b) das Polymer zu einem Vernetzungsgrad von mindestens 10 % vernetzt wird, bezogen auf die Gesamtanzahl der vernetzbaren Gruppen des Polymers.
Ein 4. Aspekt der vorliegenden Erfindung ist ein Verfahren nach einem der Aspekte 1 bis 3, worin das poröse anorganische Trägermaterial ein Material ist, das sich in wässrig-alkalischen Bedingungen bei pH > 10 auflösen lässt.
Ein 5. Aspekt der vorliegenden Erfindung ist ein Verfahren nach einem der Aspekte 1 bis 4, worin das poröse anorganische Material eines auf Basis von Kieselgel ist.
Ein 6. Aspekt der vorliegenden Erfindung ist ein Verfahren nach einem der Aspekte 1 bis 5, worin das Polymer aus Schritt (a) ein Hydroxy- oder Amino-Gruppen enthaltendes Polymer ist.
Ein 7. Aspekt der vorliegenden Erfindung ist ein Verfahren nach einem der Aspekte 1 bis 6, worin das vernetzte Polymer nach Schritt (c) in seinen Seitengruppen derivatisiert wird.
Ein 8. Aspekt der vorliegenden Erfindung sind poröse Partikel aus einem vernetzten Polymer, die nach einem Verfahren nach einem der Aspekte 1 bis 7 erhältlich sind.
Ein 9. Aspekt der vorliegenden Erfindung sind poröse Partikel nach Aspekt 8, worin die Partikel einen maximalen Quellfaktor in Wasser von 300 % aufweisen, ausgehend von 100 % trockener Partikel.
Ein 10. Aspekt der vorliegenden Erfindung sind poröse Partikel aus einem vernetzten Hydroxy- oder Amino-Gruppen enthaltenden Polymer, wobei die Partikel einen maximalen Quellfaktor in Wasser von 300 % aufweisen, ausgehend von 100 % trockener Partikel.
Ein 11. Aspekt der vorliegenden Erfindung sind poröse Partikel nach einem der Aspekte 8 bis 10, worin die Trockenschüttdichte im Bereich von 0,25 g/mL bis 0,8 g/mL liegt.
Ein 12. Aspekt der vorliegenden Erfindung sind poröse Partikel nach einem der Aspekte 8 bis 11, worin die mittlere Porengröße der Partikel im Bereich von 1 nm bis 100 nm liegt, bestimmt durch inverse Größenausschlusschromatographie.
Ein 13. Aspekt der vorliegenden Erfindung sind poröse Partikel nach einem der Aspekte 8 bis 12, worin die mittlere Partikelgröße im Bereich von 5 µm bis 1000 µm liegt.
Ein 14. Aspekt der vorliegenden Erfindung ist ein Kompositmaterial, in dem die porösen Partikel gemäß einem der Aspekte 8 bis 13 in einer kontinuierlichen wässrigen Phase dispergiert vorliegen, wobei die kontinuierliche wässrige Phase in ein Hydrogel eingebettet und/oder Bestandteil eines Hydrogels ist und/oder von einer wasserunlöslichen, ionenpermeablen Hülle umgeben ist.
Ein 15. Aspekt der vorliegenden Erfindung ist ein Kompositmaterial nach Aspekt 14, das in Form von Partikeln vorliegt.
Ein 16. Aspekt der vorliegenden Erfindung ist ein Kompositmaterial nach Aspekt 15, worin die Partikel sphärisch, linsenförmig oder stäbchenförmig vorliegen.
Ein 17. Aspekt der vorliegenden Erfindung ist ein Kompositmaterial nach Aspekt 16, worin die Partikel linsenförmig vorliegen und in der Breite einen mittleren Durchmesser im Bereich von 1 mm bis 10 mm und eine mittlere Höhe im Bereich von 100 µm bis 1000 µm aufweisen.
Ein 18. Aspekt der vorliegenden Erfindung ist ein Kompositmaterial nach einem der Aspekte 14 bis 17, worin das Hydrogel ein Gel auf Basis eines Hydroxy-Gruppen enthaltenden Polymers ist.
Ein 19. Aspekt der vorliegenden Erfindung ist ein Kompositmaterial nach einem der Aspekte 14 bis 18, worin das Hydrogel von einem Polymer auf Basis von Polyvinylalkohol gebildet ist.
Ein 20. Aspekt der vorliegenden Erfindung ist ein Verfahren zur Herstellung eines Kompositmaterials gemäß einem der Aspekte 14 bis 19, das die folgenden Schritte umfasst:
   (a) Herstellen einer wässrigen Lösung, die ein zur Bildung eines Hydrogels befähigtes Polymer und einen Zusatzstoff enthält;
   (b) Zugeben von porösen Partikeln gemäß einem der Aspekte 8 bis 13 zu der wässrigen Lösung;
   (c) Entziehen von Wasser aus der wässrigen Lösung aus Schritt (b) bis zu einem Wassergehalt von maximal 50 Gel.-%, bezogen auf die Gesamtmenge der wässrigen Lösung nach Wasserentzug, wobei eine Phasentrennung in eine wässrige, den Zusatzstoff enthaltende Phase und eine Phase, die das zur Bildung eines Hydrogels befähigten Polymer in Form eines Hydrogels aufweist, erfolgt, wobei das Hydrogel die porösen Partikel enthält; und
   (d) Trennen der beiden Phasen unter Erhalt des Kompositmaterials.
Ein 21. Aspekt der vorliegenden Erfindung ist ein Verfahren zur Herstellung eines Kompositmaterials gemäß einem der Aspekte 14 bis 19, das die folgenden Schritte umfasst:
   (a) Dispergieren von porösen Partikeln gemäß einem der Aspekte 8 bis 13 in einer wässrigen Phase, die ein Vernetzungsmittel, eine durch ein Vernetzungsmittel vernetzbare Vorstufe eines Hydrogels oder eine thermisch vernetzbare Vorstufe eines Hydrogels enthält unter Erhalt einer Dispersion;
   (b) Bildung eines Kompositmaterials aus der unter (a) erhaltenen Dispersion, wobei
      (b1) die ein Vernetzungsmittel enthaltene Dispersion zur Verkapselung mit einer im wesentlichen wasserunlöslichen, ionenpermeablen Hülle in eine Lösung eingebracht wird, die eine durch das Vernetzungsmittel vernetzbare Gelvorstufe eines wasserunlöslichen, ionenpermeablen Hüllmaterials enthält, oder
      (b2) die eine durch Hitze oder Kälte thermisch vernetzbare Vorstufe eines Hydrogels enthaltende Dispersion zur Ausbildung diskreter Gelteilchen in eine flüssige Phase eingebracht wird, die eine zur thermischen Vernetzung der Gelvorstufe ausreichend hohe oder tiefe Temperatur besitzt, oder
      (b3) die eine durch Vernetzungsmittel vernetzbare Vorstufe eines Hydrogels enthaltende Dispersion in eine das Vernetzungsmittel enthaltende Lösung eingebracht oder das Vernetzungsmittel in die Dispersion eingearbeitet wird.
Ein 22. Aspekt der vorliegenden Erfindung ist die Verwendung poröser Partikel gemäß einem der Aspekte 8 bis 13 oder eines Kompositmaterial gemäß einem der Aspekte 14 bis 19 zur Reinigung von organischen Molekülen oder zur Abtrennung von Metallen aus Lösungen.

## Patentansprüche

1. Verfahren zur Herstellung von porösen Partikeln aus einem vernetzten Polymer, das die folgenden Schritte umfasst:
(a) Aufbringen eines organischen Polymers auf ein poröses anorganisches Trägermaterial in Partikelform;
(b) Vernetzen des organischen Polymers in den Poren des anorganischen Trägermaterials; und
(c) Herauslösen des anorganischen Trägermaterials unter Erhalt der porösen Partikel aus einem vernetzten organischen Polymer.

2. Verfahren nach Anspruch 1, worin das poröse anorganische Trägermaterial ein Material ist, das sich in wässrig-alkalischen Bedingungen bei pH > 10 auflösen lässt.

3. Verfahren nach Anspruch 1 oder 2, worin das organische Polymer aus Schritt (a) ein Hydroxy- oder Amino-Gruppen enthaltendes Polymer ist.

4. Verfahren nach einem der Ansprüche 1 bis 3, worin das vernetzte organische Polymer nach Schritt (c) in seinen Seitengruppen derivatisiert wird.

5. Poröse Partikel aus einem vernetzten Polymer, die nach einem Verfahren nach einem der Ansprüche 1 bis 4 erhältlich sind.

6. Poröse Partikel nach Anspruch 5, worin die Partikel einen maximalen Quellfaktor in Wasser von 300 % aufweisen, ausgehend von 100 % trockener Partikel.

7. Poröse Partikel aus einem vernetzten Hydroxy- oder Amino-Gruppen enthaltenden Polymer, wobei die Partikel einen maximalen Quellfaktor in Wasser von 300 % aufweisen, ausgehend von 100 % trockener Partikel.

8. Poröse Partikel nach einem der Ansprüche 5 bis 7, worin die Trockenschüttdichte im Bereich von 0,25 g/mL bis 0,8 g/mL liegt.

9. Kompositmaterial, in dem die porösen Partikel gemäß einem der Ansprüche 5 bis 8 in einer kontinuierlichen wässrigen Phase dispergiert vorliegen, wobei die kontinuierliche wässrige Phase in ein Hydrogel eingebettet und/oder Bestandteil eines Hydrogels ist und/oder von einer wasserunlöslichen, ionenpermeablen Hülle umgeben ist.

10. Kompositmaterial nach Anspruch 9, das in Form von Partikeln vorliegt.

11. Kompositmaterial nach Anspruch 10, worin die Partikel sphärisch, linsenförmig oder stäbchenförmig vorliegen.

12. Verfahren zur Herstellung eines Kompositmaterials gemäß einem der Ansprüche 9 bis 11, das die folgenden Schritte umfasst:
(e) Herstellen einer wässrigen Lösung, die ein zur Bildung eines Hydrogels befähigtes Polymer und einen Zusatzstoff enthält;
(f) Zugeben von porösen Partikeln gemäß einem der Ansprüche 5 bis 8 zu der wässrigen Lösung;
(g) Entziehen von Wasser aus der wässrigen Lösung aus Schritt (b) bis zu einem Wassergehalt von maximal 50 Gel.-%, bezogen auf die Gesamtmenge der wässrigen Lösung nach Wasserentzug, wobei eine Phasentrennung in eine wässrige, den Zusatzstoff enthaltende Phase und eine Phase, die das zur Bildung eines Hydrogels befähigten Polymer in Form eines Hydrogels aufweist, erfolgt, wobei das Hydrogel die porösen Partikel enthält; und
(h) Trennen der beiden Phasen unter Erhalt des Kompositmaterials.

13. Verfahren zur Herstellung eines Kompositmaterials gemäß einem der Ansprüche 9 bis 11, das die folgenden Schritte umfasst:
(c) Dispergieren von porösen Partikeln gemäß einem der Ansprüche 5 bis 8 in einer wässrigen Phase, die ein Vernetzungsmittel, eine durch ein Vernetzungsmittel vernetzbare Vorstufe eines Hydrogels oder eine thermisch vernetzbare Vorstufe eines Hydrogels enthält unter Erhalt einer Dispersion;
(d) Bildung eines Kompositmaterials aus der unter (a) erhaltenen Dispersion, wobei
(b1) die ein Vernetzungsmittel enthaltene Dispersion zur Verkapselung mit einer im wesentlichen wasserunlöslichen, ionenpermeablen Hülle in eine Lösung eingebracht wird, die eine durch das Vernetzungsmittel vernetzbare Gelvorstufe eines wasserunlöslichen, ionenpermeablen Hüllmaterials enthält, oder
(b2) die eine durch Hitze oder Kälte thermisch vernetzbare Vorstufe eines Hydrogels enthaltende Dispersion zur Ausbildung diskreter Gelteilchen in eine flüssige Phase eingebracht wird, die eine zur thermischen Vernetzung der Gelvorstufe ausreichend hohe oder tiefe Temperatur besitzt, oder
(b3) die eine durch Vernetzungsmittel vernetzbare Vorstufe eines Hydrogels enthaltende Dispersion in eine das Vernetzungsmittel enthaltende Lösung eingebracht oder das Vernetzungsmittel in die Dispersion eingearbeitet wird.

14. Verwendung poröser Partikel gemäß einem der Ansprüche 5 bis 8 oder eines Kompositmaterial gemäß einem der Ansprüche 9 bis 11 zur Reinigung von organischen Molekülen oder zur Abtrennung von Metallen aus Lösungen.

15. Filterkartusche, die poröse Partikel gemäß einem der Ansprüche 5 bis 8 oder ein Kompositmaterial gemäß einem der Ansprüche 9 bis 11 enthält.
